(19) Europäisches Patentamt
European Patent Office
Office européen des brevets

(11) Numéro de publication: **0 036 696**
**A1**

(12) **DEMANDE DE BREVET EUROPEEN**

(21) Numéro de dépôt: **81200309.3**

(22) Date de dépôt: **19.03.81**

(51) Int. Cl.³: **H 04 B 3/23**

(30) Priorité: **26.03.80 FR 8006748**

(43) Date de publication de la demande: **30.09.81**
**Bulletin 81/39**

(84) Etats contractants désignés: **BE DE FR GB IT NL SE**

(71) Demandeur: **TELECOMMUNICATIONS RADIOELECTRIQUES ET TELEPHONIQUES T. R. T.,**
**88, rue Brillat Savarin, F-75013 Paris (FR)**

(72) Inventeur: **Guidoux, Loic Bernard Yves, SOCIETE CIVILE S.P.I.D. 209 rue de l'Université, F-75007 Paris (FR)**

(74) Mandataire: **Tissot, Jean et al, Société Civile S.P.I.D. 209, rue de l'Université, F-75007 Paris (FR)**

(54) **Annuleur d'écho pour signal d'écho à phase variable.**

(57) Cet annuleur d'écho est connecté entre deux voies émission (2) et réception (4) couplées à une voie bidirectionnelle. Il est destiné à annuler un signal d'écho à phase variable se produisant dans la voie réception et comporte un filtre adaptatif (19) connecté à la voie émission et un circuit (21) formant un signal de différence entre un signal fourni par le filtre et un signal dans la voie réception. $\hat{\emptyset}(n)$ étant une phase simulée du signal d'écho, l'annuleur d'echo de l'invention comporte soit un circuit déphaseur (25) pour déphaser de $-\hat{\emptyset}(n)$ le signal complexe formé la voie réception, soit un circuit déphaseur (50) pour déphaser de $+\hat{\emptyset}(n)$ le signal complexe fourni par le filtre. Les coefficients du filtre et la phase simulée sont réglés ensemble pour rendre minimale la valeur quadratique moyenne du signal d'écho résiduel présent dans le signal de différence.

Application: transmission de données.

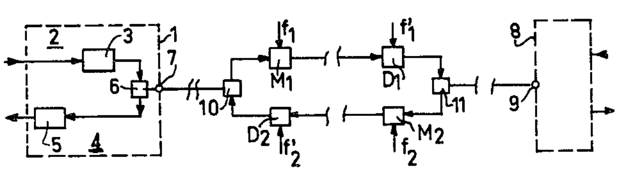


EP 0 036 696 A1

ANNULEUR D'ECHO POUR SIGNAL D'ECHO A PHASE VARIABLE.

L'invention concerne un annuleur d'écho connecté entre deux voies unidirectionnelles émission et réception couplées à une voie bidirectionnelle, et destiné à annuler un signal d'écho à phase variable se produisant dans la voie réception, cet annuleur d'écho comprenant un filtre adaptatif recevant la version complexe d'un signal de la voie émission et un circuit de différence fournissant un signal de différence entre deux signaux formés respectivement à partir du signal dans la voie réception et du signal de sortie du filtre adaptatif.

Un annuleur d'écho est utilisé par exemple dans un équipement émetteur-récepteur dont les voies unidirectionnelles émission et réception formant ensemble un circuit quatre fils sont souvent couplées par un circuit de couplage, appelé jonction hybride, de façon que l'équipement ait avec l'extérieur un accès deux fils. On sait que lorsqu'on établit une liaison entre deux équipements émetteur-récepteur par leurs accès deux fils, il peut se produire intempestivement dans la voie réception d'un équipement une fraction du signal émis par la voie émission du même équipement, par suite d'imperfections des jonctions hybrides ou par suite de réflexions de signaux dans la liaison. Un annuleur d'écho a pour but d'annuler automatiquement ce signal intempestif ou signal d'écho qui apparaît dans la voie réception. L'avantage de cette opération d'annulation d'écho est de permettre une transmission simultanée entre deux équipements émetteur-récepteur reliés par leurs accès deux fils. Ces équipements émetteur-récepteur sont par exemple des modems utilisés pour la transmission de données.

Lorsque la liaison entre les équipements émetteur-récepteur est une ligne de transmission à deux fils, le signal d'écho apparaissant dans la voie réception a la même fréquence que le signal émis par la voie émission et une phase invariable. Les dispositifs destinés à annuler ce genre de signal d'écho, appelé signal d'écho linéaire, sont bien connus. Ils comportent un filtre adaptatif qui forme à partir d'un signal dans la voie émission un signal d'écho simulé qui est soustrait du signal apparaissant sur la voie réception pour former un signal de différence. Les coefficients du filtre adaptatif sont réglés, de façon itérative, pour rendre minimale la valeur quadratique moyenne du signal d'écho résiduel présent dans le signal de différence.

Mais ces annuleurs d'écho classiques ne permettent pas de résoudre de façon satisfaisante le problème de l'annulation d'un signal d'écho à phase variable. Un signal d'écho à phase variable résulte par exemple d'une dérive de fréquence qui peut se produire, lorsque dans la liaison entre deux équipements émetteur-récepteur, est incluse une section dans laquelle la transmission est effectuée par deux systèmes à courants porteurs travaillant respectivement pour les deux sens de transmission. Si les fréquences utilisées pour la modulation et la démodulation dans chaque système à courants porteurs ne sont pas rigoureusement les mêmes, un signal émis par la voie émission d'un équipement émetteur-récepteur peut produire dans la voie réception de cet équipement un signal d'écho, qui, ayant transité par les systèmes à courants porteurs, a une fréquence différente de celle du signal émis et donc une phase variable dans le temps.

Un annuleur d'écho pour annuler un signal d'écho à phase variable est décrit dans le brevet américain n° 4 072 830. Dans cet annuleur d'écho connu, on utilise un circuit déphaseur disposé à l'entrée du filtre adaptatif et qui est commandé pour déphaser le signal à l'entrée de ce filtre d'un angle égal à une phase simulée du signal d'écho de façon que l'on obtienne à la sortie du filtre adaptatif un signal d'écho simulé ayant la même phase que le signal d'écho. La phase simulée du signal d'écho est construite à partir du signal à la sortie du filtre adaptatif de sorte que dans la boucle d'asservissement de la phase simulée est incluse la ligne à retard à prises de ce filtre. Or le retard de cette ligne à prises qui est déterminé par la durée de la réponse impulsionnelle du chemin d'écho, peut être élevé et il en résulte que cet annuleur d'écho connu a une réponse relativement lente qui ne permet pas de suivre des variations rapides de la phase du signal d'écho. Un autre inconvénient de cet annuleur d'écho connu est de conduire forcément à des calculs compliqués dans le filtre adaptatif du fait que le signal appliqué à ce filtre résulte d'un déphasage variable du signal dans la voie émission. Ainsi, même dans le cas d'un modem pour transmission de données en bande de base, où pour annuler un écho linéaire, le filtre adaptatif ne comporte que des circuits de multiplication très simples par 0 et 1, il est nécessaire pour annuler un écho à phase variable avec la conception de l'annuleur d'écho connu, d'utiliser des circuits de multiplication par les nombres "compliqués" sin $\hat{\phi}$ et cos $\hat{\phi}$, $\hat{\phi}$ représentant la phase simulée du signal d'écho.

La présente invention a pour but d'éviter ces inconvénients en fournissant un annuleur d'écho ayant une réponse rapide en ce qui concerne les variations de la phase du signal d'écho et évitant dans certains cas des calculs compliqués dans le filtre adaptatif.

Conformément à un premier mode de réalisation de l'invention, un annuleur d'écho comporte des moyens pour former un signal complexe correspondant au signal dans la voie réception, des moyens de déphasage pour changer la phase dudit signal complexe de la voie réception d'un angle égal et opposé à une phase simulée du signal d'écho à phase variable, le signal de différence résultant de la différence entre un signal fourni par lesdits moyens de déphasage et un signal fourni par le filtre adaptatif, les coefficients du filtre adaptatif et ladite phase simulée étant réglés ensemble, de façon itérative, pour rendre minimale la valeur quadratique moyenne du signal d'écho résiduel présent dans le signal de différence.

Conformément à un deuxième mode de réalisation de l'invention, un annuleur d'écho comporte des moyens dans le filtre adaptatif pour former un signal complexe à la sortie du filtre, des moyens de déphasage pour changer la phase du signal complexe fourni par le filtre adaptatif d'un angle égal à une phase simulée du signal d'écho à phase variable, le signal de différence résultant de la différence entre un signal de la voie réception et un signal fourni par lesdits moyens de déphasage, les coefficients du filtre adaptatif et ladite phase simulée étant réglés ensemble, de façon itérative, pour rendre minimale la valeur quadratique moyenne du signal d'écho résiduel présent dans ledit

signal de différence.

Dans ces deux modes de réalisation de l'invention, l'opération de déphasage pour l'annulation de l'écho est effectuée, non pas à l'entrée du filtre adaptatif mais, soit dans la voie réception soit à la sortie du filtre adaptatif et il en résulte une rapidité accrue de la réponse de l'annuleur d'écho à des variations de phase du signal d'écho et des facilités pour simplifier les calculs dans le filtre adaptatif.

Comme on le verra par la suite, suivant les signaux utilisés pour régler les coefficients et la phase simulée du signal d'écho, il existe un certain nombre de variantes qui généralement se correspondent dans les deux modes de réalisation de l'invention.

La description suivante en regard des dessins annexés, le tout donné à titre d'exemple, fera bien comprendre comment l'invention peut être réalisée.

La figure 1 est un schéma d'un système de transmission produisant un signal d'écho à phase variable.

Les figures 2 et 3 représentent des schémas des deux variantes du premier mode de réalisation de l'annuleur d'écho de l'invention dans lequel on utilise un signal de différence complexe.

La figure 4 représente le schéma d'un filtre du deuxième ordre qui peut être utilisé dans la boucle d'asservissement de la phase simulée du signal d'écho.

Les figures 5 et 6 représentent des schémas de deux autres variantes du premier mode de réalisation de l'annuleur d'écho de l'invention dans lequel on utilise un signal de différence réel.

Les figures 7, 8 et 9 représentent des schémas des trois variantes du deuxième mode de réalisation de l'annuleur d'écho de l'invention dans lequel on utilise un signal de différence complexe.

Les figures 10 et 11 représentent des schémas de deux autres variantes du deuxième mode de réalisation de l'annuleur d'écho de l'invention dans lequel on utilise un signal de différence réel.

La figure 1 montre à titre d'exemple le schéma de principe d'un système de transmission de données pouvant donner lieu à un signal d'écho à phase variable. Un modem 1 comporte une voie émission 2 munie d'un modulateur 3 recevant des données provenant d'un terminal non représenté et une voie réception 4 munie d'un récepteur 5 fournissant

des données à ce terminal. La sortie du modulateur 3 et l'entrée du récepteur 5 sont couplées par l'intermédiaire d'une jonction hybride 6, à un accès deux fils du modem représenté par la borne 7. Un modem distant 8 comporte les mêmes éléments non représentés et est muni également d'un accès deux fils représenté par la borne 9. Lorsque une liaison est établie entre ces deux modems 1 et 8, une fraction du signal émis par la voie émission 2 peut apparaître dans la voie réception 4 du modem 1 par suite d'imperfections de la jonction hybride 6 et/ou de réflexions de signaux dans la liaison ; ce signal intempestif appelé signal d'écho a la même fréquence que le signal émis quand la liaison entre les deux modems est entièrement réalisée par une ligne de transmission à deux fils. Dans ce cas, ce signal d'écho a une phase invariable et est appelé signal d'écho linéaire. Mais souvent, lorsque la distance entre les modems est importante, on trouve sur la liaison une section de transmission à quatre fils par des systèmes à courants porteurs. Comme l'indique la figure, cette section comporte à ses extrémités deux jonctions hybrides 10 et 11 pour passer de deux fils en quatre fils. Aux extrémités du trajet dans un sens de transmission, on trouve un modulateur $M_1$ et un démodulateur $D_1$ utilisant les fréquences de modulation $f_1$ et $f'_1$. Aux extrémités du trajet dans l'autre sens de transmission, on trouve le modulateur $M_2$ et le démodulateur $D_2$ utilisant les fréquences de modulation $f_2$ et $f'_2$. Lorsque le modulateur 3 du modem 1 émet, il peut se produire dans sa voie réception 4, un signal d'écho provenant d'imperfections de la jonction hybride 11 et ayant transité dans un sens par le système à courants porporteurs $M_1$, $D_1$ et dans l'autre sens par le système à courants porteurs $M_2$, $D_2$. Si les fréquences $f_1$, $f'_1$ et $f_2$, $f'_2$ sont telles que $(f'_1 - f_1) + (f'_2 - f_2) = 0$, le signal d'écho a la même fréquence que celle du signal émis par le modulateur 3 et on a affaire à un signal d'écho linéaire à phase invariable. Si par contre les fréquences $f_1$,$f'_1$ et $f_2$, $f'_2$ sont telles que $(f'_1- f_1) + (f'_2- f_2) \neq 0$, le signal d'écho est affecté d'une dérive de fréquence, de quelques Hz par exemple, et sa phase est variable dans le temps. L'annuleur d'écho de l'invention est un dispositif à inclure dans le modem 1 pour annuler un tel signal à phase variable se produisant dans la voie réception 4. On suppose par la suite que dans cette voie réception 4 il ne se produit pas de signal d'écho linéaire.

Sur la figure 2 est représenté un schéma de l'annuleur d'écho de l'invention suivant un premier mode de réalisation correspondant à une structure appelée par la suite structure I. A cet annuleur d'écho sont associés les éléments du modem 1 déjà représenté sur la figure 1 et munis des mêmes références. On suppose, à titre d'exemple, que ce modem utilise pour la transmission des données la modulation de phase ou de phase et d'amplitude d'une porteuse et que, pour former le signal de porteuse modulée on utilise dans le modulateur 3, une modulation numérique connue sous le nom de modulation d'écho.

Sous la forme simplifiée représentée, le modulateur 3 comporte un circuit de codage 12 recevant les données à transmettre et fournissant une paire de signaux représentatifs des amplitudes A(n) et des changements de phases $\varphi(n)$ à attribuer à la porteuse en fonction des données, à des instants nT déterminés par le générateur 13 de la fréquence d'horloge $\frac{1}{T}$, $\frac{1}{T}$ étant la cadence de modulation. Pour tenir compte de la variation de phase $\Delta\varphi$ de la porteuse pendant chaque intervalle de modulation T, on utilise un circuit additionneur 14 pour former à chaque instant nT la somme $\varphi(n) + \Delta\varphi$ qui est représentative de la phase absolue $\psi(n)$ de la porteuse modulée à émettre. Les deux signaux représentatifs de l'amplitude A(n) et de la phase absolue $\psi(n)$ de la porteuse sont appliqués au circuit 15 qui forme la composante réelle $A(n).\cos\psi(n)$ et la composante imaginaire $A(n).\sin\psi(n)$ du signal complexe de module A(n) et d'argument $\psi(n)$. Ces deux composantes sont appliquées aux filtres passe-bande 16 et 17 dont les signaux de sortie sont additionnés dans le circuit additionneur 18 pour former le signal analogique de porteuse modulée qui est dirigé vers l'accès d'émission de la jonction hybride 6.

On utilise dans l'annuleur d'écho le signal complexe, appelé aussi signal analytique, dont les composantes réelle et imaginaire sont disponibles dans l'exemple choisi à la sortie du circuit 15 et qui est représentatif de l'amplitude A(n) et de la phase absolue $\psi(n)$ de la porteuse à émettre aux instants nT. Ce signal complexe ainsi défini est appelé par la suite signal complexe D(n). Dans le cas où, dans un modulateur 3 d'un autre type, ne se trouveraient pas disponibles les composantes réelle et imaginaire de ce signal complexe D(n), il serait toujours possible d'incorporer dans l'annuleur d'écho des circuits formant ces composantes à partir des données brutes à transmettre.

On doit noter ici que dans le schéma de l'annuleur d'écho les liaisons représentées par un trait double transportent les deux composantes réelle et imaginaire d'un signal complexe, mais, pour simplifier les explications, on ne parlera souvent par la suite que des signaux complexes transportés par ces liaisons. De même, lorsque des signaux complexes sont appliqués à des circuits de traitement, il est entendu que ces traitements sont effectués en pratique à partir de leurs composantes réelles et imaginaires, qui sont des signaux réels et on n'explicitera généralement pas les traitements effectués en pratique, étant donné qu'ils résultent de formules bien connues dans la notation des nombres complexes.

On suppose par la suite, à titre d'exemple, que les deux composantes réelle et imaginaire du signal complexe D(n), fournies par le circuit 15 sont des signaux analogiques échantillonnés aux instants nT. Les échantillons formant le signal complexe D(n) sont appliqués à un filtre adaptatif composé d'un filtre transversal 19 et d'un circuit de réglage 20 qui élabore des coefficients complexes utilisés dans le filtre 19. On n'a pas représenté la constitution du filtre transversal 19 qui, comme cela est bien connu, comporte des moyens pour stocker un certain nombre d'échantillons successifs du signal complexe D(n) appliqué à son entrée, et des moyens de calcul pour pondérer ces échantillons successifs par les coefficients complexes fournis par le circuit 20 et pour former la somme de ces échantillons pondérés. Cette somme constitue le signal de sortie du filtre adaptatif de l'annuleur d'écho. Le filtre adaptatif 19 est réalisé suivant des techniques analogiques, par exemple du genre connu sous le nom de CCD (en anglais charge-coupled device). Il pourraît être aussi réalisé suivant des techniques numériques ce qui impliquerait une conversion analogique-numérique des échantillons du signal complexe D(n).

Le signal fourni par le filtre transversal 19 est appliqué à une entrée du circuit de différence 21. A l'autre entrée de ce circuit de différence 21 est appliqué un signal formé à partir du signal apparaissant sur l'accès réception de la jonction hybride 6. Le signal de différence fourni par le circuit de différence 21 est appliqué au circuit de réglage des coefficients 20. Dans les annuleurs d'écho destinés à annuler un signal d'écho linéaire à phase invariable, les coefficients du filtre transversal 19 sont réglés de façon itérative, pour

rendre minimale la valeur quadratique moyenne du signal d'écho résiduel présent dans le signal de différence. Après la convergence de l'annuleur d'écho, le signal d'écho est pratiquement annulé à l'entrée du récepteur 5 reliée à la sortie du circuit de différence 21.

La technique décrite dans le brevet américain précité n° 4 072 840 et permettant d'annuler un signal d'écho à phase variable consiste à utiliser un circuit déphaseur branché à l'entrée du filtre transversal 19 pour déphaser le signal complexe D(n), ce circuit déphaseur étant commandé à partir du signal de différence et du signal de sortie du filtre transversal 19. En réglant en même temps les coefficients du filtre transversal et le déphasage effectué à l'entrée de ce filtre transversal de façon à minimiser la valeur quadratique moyenne du signal d'écho résiduel présent dans le signal de différence, on peut annuler pratiquement le signal d'écho à phase variable. Mais cette technique connue a les inconvénients déjà signalés, qui sont d'une part une réponse lente aux variations de la phase du signal d'écho du fait que le filtre transversal 19 est inclus dans la boucle de commande du circuit déphaseur et d'autre part, dans le cas de la transmission de données, la complication des calculs dans le filtre transversal 19 du fait du déphasage variable effectué à l'entrée de ce filtre.

La présente invention pallie ces inconvénients en évitant de modifier le signal à l'entrée du filtre transversal pour l'annulation d'un signal d'écho à phase variable.

Conformément à l'invention, l'annuleur d'écho comporte un circuit 22 connecté à l'accès réception de la jonction hybride 6 et comportant une voie directe et une voie munie d'un circuit déphaseur 23 de 90° pour fournir respectivement la composante réelle et la composante imaginaire d'un signal complexe. Du point de vue du fonctionnement de l'annuleur d'écho, on peut supposer que le signal provenant de la jonction hybride 6 et appliqué au circuit 22 ne contient aucun autre signal que le signal d'écho (à phase variable) produit par le signal émis par le modulateur 3 ; c'est dans ce cas qui permet de simplifier le raisonnement et les calculs que l'on se placera toujours par la suite. Le signal complexe fourni par le circuit 22 a alors la phase variable Ø du signal d'écho.

Le signal complexe fourni par le circuit 22 est appliqué à un circuit d'échantillonnage et de maintien 24. L'échantillonnage

y est effectué à une fréquence $f_e$ fournie par le générateur d'horloge 13 et ayant une valeur multiple de $\frac{1}{T}$ telle que le théorème de Shannon soit respecté vis à vis du signal d'écho. Les instants $t_e$ de cet échantillonnage sont liés aux instants d'échantillonnage nT du signal complexe D(n) par la relation $t_e = nT + r \frac{T}{M}$,
M étant un nombre entier fixe, égal par exemple à 6,
r étant un nombre entier variable de 0 à M - 1.
Pour simplifier les formules donnant les calculs à effectuer, on ne fait intervenir par la suite que la variable n et pas la variable r, mais il est entendu que les calculs indiqués devront être effectués pour les M valeurs que peut prendre la variable r.

Dans une version numérique de l'annuleur d'écho, le signal échantillonné fourni par le circuit 24 devrait être converti en numérique, tandis que dans la version analogique décrite à la figure 2, il est appliqué directement à un circuit déphaseur 25 qui change la phase $\emptyset$ du signal d'écho complexe appliqué à son entrée d'un angle $-\hat{\emptyset}$, $\hat{\emptyset}$ étant une phase simulée du signal d'écho. Ce circuit déphaseur 25 comporte à cet effet un circuit multiplicateur pour signaux complexes 26 qui reçoit d'une part le signal d'écho complexe fourni par le circuit 24 et d'autre part le signal complexe $\exp(-j\hat{\emptyset})$ fourni par le circuit 27 sous la forme de ses deux composantes réelle et imaginaire $\cos\hat{\emptyset}$ et $-\sin\hat{\emptyset}$. Le circuit 27 est par exemple une mémoire qui contient des valeurs discrètes de $\cos\hat{\emptyset}$ et $-\sin\hat{\emptyset}$ et qui est adressée par des valeurs discrètes de la phase simulée $\hat{\emptyset}$ du signal d'écho. Cette phase simulée $\hat{\emptyset}$ est engendrée dans le circuit de réglage 28.

Le signal d'écho complexe déphasé fourni par le circuit déphaseur 25 est appliqué à une entrée du circuit de différence 21 dont l'autre entrée reçoit le signal complexe fourni par le filtre transversal 19. Le signal de différence complexe fourni par le circuit 21 est le signal d'écho résiduel, appelé aussi signal d'erreur. Il est appliqué d'une part au circuit de réglage 20 des coefficients du filtre transversal 19, et d'autre part au circuit de réglage 28 de la phase simulée du signal d'écho, qui reçoit également le signal d'écho déphasé fourni par le circuit déphaseur 25. On montrera plus loin qu'en réglant en même temps, de façon itérative, d'une part les coefficients du filtre transversal 19 à partir du signal d'erreur et d'autre part la phase simulée $\hat{\emptyset}$ à partir du signal d'erreur et du signal d'écho déphasé, pour rendre

minimale la valeur quadratique moyenne du signal d'erreur, le signal intempestif d'écho à phase variable est pratiquement annulé à la sortie du circuit de différence 21, après un certain nombre d'itérations successives.

Du signal complexe fourni par le circuit de différence 21 et ainsi débarrassé du signal d'écho, le récepteur 5 du modem n'utilise que la composante réelle préalablement filtrée dans le filtre passe-bas 29.

On va maintenant formuler de façon mathématique les calculs à effectuer dans l'annuleur d'écho pour expliquer comment sont constitués le circuit de réglage des coefficients 20 et le circuit de réglage 28 de la phase simulée et comment fonctionne l'ensemble de l'annuleur d'écho.

On définit d'abord les différents grandeurs, signaux et notations qui sont utilisés par la suite. Aux instants d'échantillonnage nT :

$\phi(n)$ est la phase du signal d'écho,

$\hat{\phi}(n)$ est la phase simulée du signal d'écho,

$\varepsilon_f(n)$ est le signal d'écho complexe appliqué au circuit déphaseur 25,

$\varepsilon_d(n)$ est le signal d'écho complexe déphasé de $-\hat{\phi}(n)$ par le circuit déphaseur 25,

$\hat{\varepsilon}_d(n)$ est le signal complexe qui est fourni par le filtre transversal 19 et qui est un signal d'écho synthétique déphasé automatiquement de $-\hat{\phi}(n)$,

e(n) est le signal d'erreur complexe fourni par le circuit de différence 21.

Par ailleurs, le filtre transversal 19 stocke à un instant nT, N échantillons successifs du signal complexe D(n) appliqué à son entrée, ces échantillons pouvant s'écrire D(n-q) avec q entier variable de 0 à N - 1. En utilisant la notation vectorielle, ces N échantillons D(n-q) peuvent être considérés comme les composantes d'un vecteur $\vec{D}(n)$ tel que :

$$\vec{D}(n) = \begin{bmatrix} D(n) \\ D(n-1) \\ \vdots \\ D(n-N+1) \end{bmatrix}$$

De même les N noefficients $d_q$ du filtre transversal peuvent être considérés comme les composantes d'un vecteur $\vec{d}$ tel que :

$$\vec{d} = \begin{bmatrix} d_o \\ d_1 \\ \vdots \\ d_{N-1} \end{bmatrix}$$

Le transposé $D(n)$ du vecteur $\vec{D}(n)$ s'écrit :

$$\underset{\rightarrow}{D}(n) = \left[ D(n) \quad D(n-1) \ldots D(n-N+1) \right]$$

Le signal $\hat{\varepsilon}_d(n)$ fourni par le filtre transversal 19 résulte de l'opération de convolution :

$$\hat{\varepsilon}_d(n) = \sum_{q=0}^{N-1} D(n-q)\, d_q$$

Cette opération s'écrit en notation vectorielle :

$$\hat{\varepsilon}_d(n) = \underset{\rightarrow}{D}(n)\, \vec{d} \qquad (1)$$

On peut écrire de façon analogue le signal d'écho complexe $\varepsilon_f(n)$ qui résulte de l'application du signal D(n) au trajet de signal d'écho à phase variable. A cet effet, si k est la réponse impulsionnelle de ce trajet de signal d'écho, on peut définir un vecteur $\vec{k}$ ayant comme composantes les valeurs $k_q$ de cette réponse impulsionnelle aux instants qT. En tenant compte de la phase variable Ø(n) produite par le trajet de signal d'écho, le signal d'écho complexe $\varepsilon_f(n)$ peut s'écrire :

$$\varepsilon_f(n) = \underset{\rightarrow}{D}(n).\vec{k}.\exp j\text{Ø}(n) \qquad (2)$$

Le déphasage $-\hat{\text{Ø}}(n)$ opéré sur ce signal d'écho par le circuit déphaseur 25 fournit le signal déphasé $\varepsilon_d(n)$ tel que :

$$\varepsilon_d(n) = \underset{\rightarrow}{D}(n).\vec{k}.\exp j\left[\text{Ø}(n) - \hat{\text{Ø}}(n)\right] \qquad (3)$$

Compte tenu des formules (1) et (3) le signal d'erreur e(n) s'écrit :

$$e(n) = \underset{\rightarrow}{D}(n)\left[\vec{k}.\exp j\left[\varnothing(n) - \hat{\varnothing}(n)\right] - \vec{d}\right] \quad (4)$$

Ce signal d'erreur e(n) ou signal d'écho résiduel sera annulé si en même temps on a :

$$\begin{cases} \vec{d} = \vec{k}\ \exp\text{-}j\ \varnothing_o \\ \hat{\varnothing}(n) = \varnothing(n) + \varnothing_o \end{cases} \quad (5)$$

$\varnothing_o$ étant une constante.

On va maintenant montrer comment dans l'annuleur d'écho de l'invention on asservit les coefficients $\vec{d}$ du filtre transversal 19 et la phase simulée $\hat{\varnothing}(n)$ de façon à réaliser les deux conditions (5) d'annulation du signal d'écho.

Le critère d'asservissement est la minimisation de la valeur quadratique moyenne du signal d'erreur complexe e(n), qui s'écrit $E\left[|e(n)|^2\right]$, E étant un opérateur signifiant la valeur moyenne de la quantité entre crochets qui suit.

Il est connu que si on utilise l'algorithme du gradient pour minimiser cette valeur quadratique moyenne, on est conduit à régler les coefficients $\vec{d}$ et la phase simulée $\hat{\varnothing}(n)$ suivant les formules de récurrence :

$$\begin{cases} \vec{d}(n+1) = \vec{d}(n) - \frac{\alpha}{2}\frac{\partial E|e(n)|^2}{\partial \overrightarrow{d(n)}} & (6) \\ \hat{\varnothing}(n+1) = \hat{\varnothing}(n) - \frac{\beta}{2}\frac{\partial E|e(n)|^2}{\partial \hat{\varnothing}(n)} & (7) \end{cases}$$

Dans ces formules $\vec{d}(n+1)$ et $\vec{d}(n)$ sont les vecteurs représentant les coefficients $\vec{d}$ du filtre transversal 19 aux instants $(n+1)T$ et $nT$ ; $\alpha$ et $\beta$ sont des coefficients plus petits que 1, qui déterminent la grandeur de la modification des coefficients et de la phase simulée, à chaque itération.

Pour mettre en oeuvre ces formules de récurrence (6) et (7), on est amené à calculer les deux dérivées partielles y figurant, pour faire apparaître des opérations simples sur des signaux. Comme, par la suite, on est conduit à plusieurs reprises à des calculs de ce genre, on donne ci-après la marche à suivre.

Pour calculer en premier lieu la dérivée partielle $\frac{\partial E|e(n)|^2}{\partial \vec{d}(n)}$ de la formule (6), on pose :

$$\vec{d}(n) = \vec{a}(n) + j\,\vec{b}(n)$$

$\vec{a}(n)$ et $\vec{b}(n)$ sont des vecteurs dont les composantes sont respectivement la partie réelle et la partie imaginaire des coefficients complexes du filtre transversal 19.

Par la suite la conjuguée d'une quantité complexe est notée en munissant cette quantité complexe d'une astérisque en indice. Comme $|e(n)|^2 = e(n).e^*(n)$, on peut écrire :

$$\left\{\begin{aligned} \frac{\partial E|e(n)|^2}{\partial \vec{a}(n)} &= E\left[e(n).\frac{\partial e^*(n)}{\partial \vec{a}(n)} + e^*(n).\frac{\partial e(n)}{\partial \vec{a}(n)}\right] \\ \frac{\partial E|e(n)|^2}{\partial \vec{b}(n)} &= E\left[e(n).\frac{\partial e^*(n)}{\partial \vec{b}(n)} + e^*(n).\frac{\partial e(n)}{\partial \vec{b}(n)}\right] \end{aligned}\right.$$

D'autre part, en tenant compte de la formule (4), on peut écrire :

$$\left\{\begin{aligned} \frac{\partial e(n)}{\partial \vec{a}(n)} &= -\,\vec{D}(n) \\ \frac{\partial e(n)}{\partial \vec{b}(n)} &= -\,j\,\vec{D}(n) \\ \frac{\partial e^*(n)}{\partial \vec{a}(n)} &= -\,\vec{D}^*(n) \\ \frac{\partial e^*(n)}{\partial \vec{b}(n)} &= \;j\,\vec{D}^*(n) \end{aligned}\right. \qquad (8)$$

Par des calculs simples on peut en déduire :

$$\begin{cases} \dfrac{\partial E|e(n)|^2}{\partial \vec{a}(n)} = - E\left[e(n).\vec{D}^*(n) + e^*(n).\vec{D}(n)\right] = -2E\left\{\mathbb{R}e\left[e(n).\vec{D}^*(n)\right]\right\} \\ \dfrac{\partial E|e(n)|^2}{\partial \vec{b}(n)} = E\left\{j\left[e(n).\vec{D}^*(n) - e^*(n).\vec{D}(n)\right]\right\} = -2E\left\{\mathbb{I}m\left[e(n).\vec{D}^*(n)\right]\right\} \end{cases}$$

Dans ces dernières formules $\mathbb{R}e$ et $\mathbb{I}m$ signifient partie réelle et partie imaginaire de la quantité complexe entre crochets qui suit.

En posant $\dfrac{\partial E|e(n)|^2}{\partial \vec{d}(n)} = \dfrac{\partial E|e(n)|^2}{\partial \vec{a}(n)} + j\,\dfrac{\partial E|e(n)|^2}{\partial \vec{b}(n)}$, on obtient le résultat concernant la dérivée partielle figurant dans la formule de récurrence (6) :

$$\frac{\partial E|e(n)|^2}{\partial \vec{d}(n)} = -2E\left[e(n).\vec{D}^*(n)\right] \qquad (9)$$

On va maintenant montrer comment on peut calculer la dérivée partielle $\dfrac{\partial E|e(n)|^2}{\partial \hat{\varnothing}(n)}$ intervenant dans la formule (7). On peut écrire facilement :

$$\frac{\partial E|e(n)|^2}{\partial \hat{\varnothing}(n)} = E\left[e(n).\frac{\partial e^*(n)}{\partial \hat{\varnothing}(n)} + e^*(n).\frac{\partial e(n)}{\partial \hat{\varnothing}(n)}\right]$$

D'autre part, en tenant compte de la formule (4), on peut écrire :

$$\begin{cases} \dfrac{\partial e(n)}{\partial \hat{\varnothing}(n)} = -j\,\underset{\rightarrow}{D}(n).\vec{k}.\exp j\left[\varnothing(n) - \hat{\varnothing}(n)\right] \\ \dfrac{\partial e^*(n)}{\partial \hat{\varnothing}(n)} = +j\,\underset{\rightarrow}{D}^*(n).\vec{k}^*.\exp -j\left[\varnothing(n) - \hat{\varnothing}(n)\right] \end{cases}$$

On voit aisément que les deux quantités complexes $\dfrac{\partial e(n)}{\partial \hat{\varnothing}(n)}$ et $\dfrac{\partial e^*(n)}{\partial \hat{\varnothing}(n)}$ sont conjuguées l'une de l'autre et l'on en déduit :

$$\frac{\partial E|e(n)|^2}{\partial \hat{\emptyset}(n)} = 2E \left\{ \mathbb{R}e \left[ e(n).\frac{\partial e^*(n)}{\partial \hat{\emptyset}(n)} \right] \right\}$$

$$= -2E \left\{ \mathbb{I}m \left[ e(n).\vec{D}^*(n).\vec{k}^*.\exp - j\left[\emptyset(n) - \hat{\emptyset}(n)\right] \right] \right\}$$

Par ailleurs, d'après la formule (2) on a :

$$\varepsilon^*_f(n) = \vec{D}^*(n).\vec{k}^*.\exp - j\ \emptyset(n)$$

En introduisant cette quantité $\varepsilon^*_f(n)$, dans la formule qui précède on obtient le résultat concernant la dérivée partielle figurant à la formule (7) :

$$\frac{\partial E|e(n)|^2}{\partial \hat{\emptyset}(n)} = -2E \left\{ \mathbb{I}m \left[ e(n).\exp j\ \hat{\emptyset}(n).\varepsilon^*(n) \right] \right\} \qquad (10)$$

Finalement, en utilisant les résultats des formules (9) et (10), les formules de récurrence (6) et (7) à mettre en oeuvre dans l'annuleur d'écho peuvent s'écrire :

$$\begin{cases} \vec{d}(n+1) = \vec{d}(n) + \alpha\ E\left[e(n).\vec{D}^*(n)\right] & (11) \\ \hat{\emptyset}(n+1) = \hat{\emptyset}(n) + \beta\ E\left\{\mathbb{I}m\left[e(n).\exp.j\ \hat{\emptyset}(n).\varepsilon^*_f(n)\right]\right\} & (12) \end{cases}$$

En tenant compte du caractère aléatoire des données à transmettre, c'est-à-dire des composantes du vecteur $\vec{D}(n)$, on peut montrer que lorsque n tend vers l'infini dans ces deux formules de récurrence (11) et (12), la phase simulée $\hat{\emptyset}(n)$ tend vers la phase $\emptyset(n)$ du signal d'écho à une constante additive près $\emptyset_o$, $\emptyset_o$ étant la moyenne temporelle de la phase $\emptyset(n)$, tandis que les coefficients $\vec{d}(n)$ du filtre transversal 19 tendent vers la réponse impulsionnelle $\vec{k}$ du chemin d'écho, à un coefficient multiplicateur près, exp-j $\emptyset_o$. Il en résulte, comme le montre la formule (4), que lorsque n tend vers l'infini le signal d'erreur e(n), c'est-à-dire le signal d'écho résiduel, tend vers zéro. Bien entendu, dans la mise en oeuvre de ces formules de récurrence (11) et (12), on obtient pratiquement l'annulation du signal d'écho résiduel, après un nombre limité d'itérations successives.

Selon une pratique courante, on peut remplacer les formules de récurrence (11) et (12) par des formules de récurrence plus simples à mettre en oeuvre en évitant des intégrations pour le calcul des valeurs moyennes :

$$\begin{cases} \vec{d}(n+1) = \vec{d}(n) + \alpha . e(n) . \vec{D}^*(n) & (13) \\ \hat{\phi}(n+1) = \hat{\phi}(n) + \beta . \mathrm{I}_m \left[ e(n) . \exp j \, \hat{\phi}(n) . \varepsilon^*_f(n) \right] & (14) \end{cases}$$

$\alpha$ et $\beta$ sont des coefficients très petits devant 1, pour déterminer de faibles incréments de modification des coefficients et de la phase simulée à chaque itération.

Pour mettre en oeuvre de façon plus simple la formule de récurrence (14), on peut l'écrire sous une forme équivalente en y faisant apparaître le signal d'écho déphasé $\varepsilon_d(n) = \varepsilon_f(n).\exp - j\hat{\phi}(n)$. Comme on a $\varepsilon^*_d(n) = \varepsilon^*_f(n).\exp j\hat{\phi}(n)$, la formule (14) peut s'écrire simplement :

$$\hat{\phi}(n+1) = \hat{\phi}(n) + \beta . \mathrm{I}_m \left[ e(n) . \varepsilon^*_d(n) \right] \quad (15)$$

On peut encore écrire sous une autre forme simple la formule de récurrence (14), en faisant apparaître le signal $\hat{\varepsilon}_d(n)$ fourni par le filtre transversal 19. Pour cela dans sa forme équivalente 15, on remplace le signal d'erreur e(n) par son expression $e(n) = \varepsilon_d(n) - \hat{\varepsilon}_d(n)$. En tenant compte du fait que la quantité $\varepsilon_d(n).\varepsilon^*_d(n)$ est une quantité réelle, on obtient finalement la formule de récurrence :

$$\hat{\phi}(n+1) = \hat{\phi}(n) - \beta . \mathrm{I}_m \left[ \hat{\varepsilon}_d(n) . \varepsilon^*_d(n) \right] \quad (16)$$

La mise en oeuvre des formules de récurrence (13) et (15) correspond à une première variante, dite variante 1, pour la structure I de l'annuleur d'écho de l'invention. La mise en oeuvre des formules de récurrence (13) et (16) correspond à la variante 2 de la structure I de cet annuleur d'écho.

La figure 2 représente de façon complète le schéma de la variante 1. Le circuit 20 règle les coefficients complexes du filtre transversal 19 suivant la formule de récurrence (13). Le schéma indiqué, qui est identique pour tous les coefficients, concerne par exemple le coefficient complexe $d_q(n)$ qui à l'instant nT a été multiplié dans le

filtre transversal 19 par l'échantillon complexe D(n - q) entré dans le filtre à un instant précédent (n - q)T. En ce qui concerne la modification de ce coefficient $d_q(n)$, pour obtenir le coefficient $d_q(n + 1)$ à utiliser dans le filtre à l'instant (n + 1)T, la formule (13) s'écrit :

$$d_q(n + 1) = d_q(n) + \alpha.e(n).D^*(n - q) \qquad (13A)$$

Le circuit de réglage 20 comporte pour un coefficient, un circuit 30 qui forme à chaque instant nT la valeur conjuguée D*(n - q) de l'échantillon complexe D(n - q) stocké dans le filtre 19. Le circuit 30 contient un simple circuit non représenté, qui change le signe de la partie imaginaire de D(n - q). Le circuit multiplicateur 31 pour signaux complexes, forme le produit e(n).D*(n - q), qui est multiplié par le coefficient α au moyen du circuit multiplicateur 32. Le terme de modification du coefficient considéré α.e(n).D*(n - q) est ajouté, au moyen du circuit additionneur 33, au coefficient $d_q(n)$ sortant du circuit de retard T, 34, pour former le coefficient $d_q(n + 1)$ à utiliser dans le filtre à l'instant (n + 1)T.

La phase simulée est engendrée dans le circuit de réglage 28 qui met en oeuvre la formule de récurrence (15). Ce circuit de réglage de la phase simulée 28 comporte un circuit 35 qui forme à chaque instant nT la valeur conjuguée $\varepsilon^*_d(n)$ de l'échantillon complexe du signal d'écho déphasé $\varepsilon_d(n)$ disponible à la sortie du circuit déphaseur 25. Le circuit multiplicateur 36 pour signaux complexes forme le produit $e(n).\varepsilon^*_d(n)$, la boîte 37 montrant que l'on n'en retient que la partie imaginaire. Le signal réel fourni par la boîte 37 est appliqué au circuit multiplicateur 38 pour y être multiplié par le coefficient β. Pour des raisons expliquées par la suite, ce circuit multiplicateur est inclus dans une boîte 39. Le terme de modification de la phase simulée, $\beta.\mathrm{I}_m\left[e(n).\varepsilon^*_d(n)\right]$ est ajouté, au moyen du circuit additionneur 40, à la phase simulée $\hat{\phi}(n)$ sortant du circuit de retard T, 41, pour former la phase simulée $\hat{\phi}(n + 1)$ à utiliser dans le circuit déphaseur 25 à l'instant (n + 1)T.

Comme on l'a expliqué, après un certain nombre d'itérations successives, les coefficients du filtre transversal et la phase simulée atteignent pratiquement des valeurs produisant l'annulation du signal d'écho résiduel e(n).

La variante 2 de la structure I de l'annuleur d'écho de l'invention est représentée sur la figure 3. Sur cette figure 3, on a

repris avec les mêmes références, une partie des éléments de la figure 2, de façon à montrer seulement les différences entre les variantes 1 et 2.

Dans cette figure 3, le circuit de réglage 20 des coefficients du filtre 19 n'a pas été représenté en détail puisque, mettant en oeuvre la formule de récurrence (13), il est exactement le même que celui représenté à la figure 2. Le circuit de réglage 28 de la phase simulée met en oeuvre la formule de récurrence (16) et diffère donc de celui de la figure 2 par le fait que le circuit multiplicateur 36 reçoit le signal d'écho simulé $\hat{\varepsilon}_d(n)$, au lieu du signal d'erreur e(n), de façon à former le produit $\hat{\varepsilon}_d(n).\varepsilon^*_d(n)$. Par ailleurs, pour tenir compte du signe - affecté au terme de modification de la phase simulée dans la formule (16), on a disposé un circuit 42 qui change le signe du signal fourni par le circuit multiplicateur 38. Après un certain nombre d'itérations successives, on obtient pratiquement avec l'annuleur d'écho selon la variante 2 de la figure 3, l'annulation du signal d'écho résiduel e(n).

Dans l'annuleur d'écho de l'invention décrit jusqu'à présent, la phase simulée $\hat{\varnothing}(n)$ est asservie sur la phase $\varnothing(n)$ du signal d'écho au moyen d'une boucle de verrouillage de phase formée par le circuit de réglage 28 connecté entre l'entrée et la sortie du circuit déphaseur 25 et recevant en outre soit le signal d'erreur e(n) pour la variante 1, soit le signal $\hat{\varepsilon}_d(n)$ sortant du filtre 19, pour la variante 2. Dans cette boucle il n'est pas introduit d'autre retard que le retard T, inévitable, déterminé par le circuit 41. Il en résulte que la phase simulée peut suivre sans retard important les variations de phases rapides du signal d'écho pour contribuer à l'annulation du signal d'écho, le temps de réponse de la boucle de verrouillage de phase étant pratiquement déterminé par la valeur du coefficient β qui est appliqué au circuit multiplicateur 38 et qui doit toutefois rester relativement faible par rapport à 1 pour éviter les instabilités.

Le spécialiste des asservissements comprendra aisément que dans la boucle de verrouillage de phase le circuit 38 de multiplication par le coefficient β joue le rôle d'un filtre de boucle qui est du premier ordre, ce filtre de boucle étant représenté d'une manière plus générale par la boîte 39. Le signal appliqué à ce filtre de boucle 39 est en fait l'écart constaté $\delta\varnothing$ entre la phase du signal d'écho et la phase simulée. On sait qu'avec un filtre du premier ordre dans une telle boucle de verrouillage de phase, il subsiste nécessairement une valeur

résiduelle de l'écart de phase $\delta\emptyset$, même lorsque la phase du signal d'écho ne varie pas ou varie très lentement. On peut éviter cet écart de phase $\delta\emptyset$ en utilisant un filtre de boucle 39 plus complexe qu'un filtre du premier ordre.

Ce filtre de boucle 39 peut être par exemple un filtre du deuxième ordre répondant au schéma représenté sur la figure 4. Dans ce filtre 39, l'écart de phase $\delta\emptyset$ est appliqué au circuit multiplicateur 38 par le coefficient $\beta$ et à un autre circuit multiplicateur 43 par un autre coefficient $\gamma$ inférieur à 1. Le produit $\gamma.\delta\emptyset$ est appliqué à un circuit additionneur 44 qui est monté avec le circuit 45 produisant un retard T, pour former un accumulateur. Le circuit additionneur 46 forme la somme du produit $\beta\delta\emptyset$ et des produits accumulés $\gamma.\delta\emptyset$, cette somme constituant le signal de sortie du filtre du second ordre 39. Grâce à la branche 43, 44, 45 du filtre, qui fournit toujours un signal non nul, la valeur résiduelle de l'écart de phase $\delta\emptyset$ est annulée lorsque la phase du signal d'écho ne varie pas ou varie lentement.

Le circuit 28 de réglage de la phase simulée peut être réalisé de manière un peu différente de celle que l'on vient de décrire par les figures 2 et 3.

Sur la figure 2 le circuit d'asservissement de phase résulte de la mise en oeuvre de la formule de récurrence (15). Mais étant donné que $\mathrm{I}_m\left[e(n).\varepsilon^*_d(n)\right] = -\mathrm{I}_m\left[e^*(n).\varepsilon_d(n)\right]$ la formule (15) peut aussi s'écrire :

$$\hat{\emptyset}(n+1) = \hat{\emptyset}(n) - \beta\,\mathrm{I}_m\left[e^*(n).\varepsilon_d(n)\right] \qquad (17)$$

Pour mettre en oeuvre cette formule de récurrence (17), il suffit simplement sur la figure 2 d'appliquer directement à une entrée du circuit multiplicateur 36 le signal d'écho déphasé $\varepsilon_d(n)$, d'appliquer à l'autre entrée la valeur conjuguée $e^*(n)$ du signal d'erreur $e(n)$ et enfin de changer le signe du signal fourni par le filtre 39.

De la même manière, en tenant compte de l'égalité

$\mathrm{I}_m\left[\hat{\varepsilon}_d(n).\varepsilon^*_d(n)\right] = -\mathrm{I}_m\left[\hat{\varepsilon}^*_d(n).\varepsilon_d(n)\right]$, la formule de récurrence (16) mise en oeuvre sur la figure 3, peut aussi s'écrire :

$$\hat{\emptyset}(n + 1) = \hat{\emptyset}(n) + \beta \, \mathbb{I}_m \left[\hat{\varepsilon}^*{}_d(n) . \varepsilon_d(n)\right] \qquad (18)$$

Les transformations à effectuer sur la figure 3 pour mettre en oeuvre la formule de récurrence (18) sont évidentes, à partir de ce qu'on vient d'expliquer.

Avec un annuleur d'écho ayant la structure I décrite jusqu'à présent, c'est-à-dire comportant un circuit déphaseur 25, pour déphaser le signal d'écho complexe, on peut aussi utiliser comme critère d'asservissement des coefficients du filtre transversal et de la phase simulée du signal d'écho, la minimisation de la valeur quadratique moyenne de la composante réelle $e^R(n)$ du signal d'erreur complexe e(n) au lieu du signal d'erreur complexe lui-même. On a l'avantage de simplifier un certain nombre de circuits de calcul, au prix toutefois d'une certaine augmentation du temps de convergence.

Si l'on utilise l'algorithme du gradient pour minimiser la valeur quadratique moyenne de l'erreur réelle soit $E\left[e^R(n)\right]^2$, on est conduit à régler les coefficients $\vec{d}$ du filtre transversal et la phase simulée $\hat{\emptyset}(n)$ du signal d'écho suivant les formules de récurrence :

$$\left\{\begin{array}{ll} \vec{d}(n + 1) = \vec{d}(n) - \frac{\alpha}{2} \frac{\partial E\left[e^R(n)\right]^2}{\partial \vec{d}(n)} & (19) \\ \hat{\emptyset}(n + 1) = \hat{\emptyset}(n) - \frac{\beta}{2} \frac{\partial E\left[e^R(n)\right]^2}{\partial \hat{\emptyset}(n)} & (20) \end{array}\right.$$

En tenant compte du fait que l'erreur réelle $e^R(n)$ a pour expression $e^R(n) = \frac{1}{2}\left[e(n) + e^*(n)\right]$ on peut calculer les dérivées partielles figurant dans les formules (19) et (20) de façon analogue à ce qui a été fait ci-dessus dans le cas d'utilisation de l'erreur complexe e(n).

Tous calculs effectués, les formules de récurrence (19) et (20) peuvent s'écrire en utilisant des coefficients $\alpha$ et $\beta$ petits par rapport à 1 pour éviter de calculer une valeur moyenne :

$$\begin{cases} \vec{d}(n+1) = \vec{d}(n) + \alpha.e^{R}(n).D^{*}(n) & (21) \\ \hat{\phi}(n+1) = \hat{\phi}(n) + \beta.e^{R}(n).\mathrm{I}_{m}\left[\varepsilon^{*}_{f}(n) \exp j\, \hat{\phi}(n)\right] & (22) \end{cases}$$

Pour mettre en oeuvre de façon plus simple la formule de récurrence (22), on peut l'écrire sous une forme équivalente en faisant apparaître la composante imaginaire $\varepsilon^{I}_{d}(n)$ du signal d'écho déphasé $\varepsilon_{d}(n)$. Cette forme équivalente est :

$$\hat{\phi}(n+1) = \hat{\phi}(n) - \beta.e^{R}(n).\varepsilon^{I}_{d}(n) \quad (23)$$

On peut encore écrire sous une autre forme plus simple la formule de récurrence (22) en faisant apparaître la composante réelle $\hat{\varepsilon}^{R}_{d}(n)$ du signal complexe $\hat{\varepsilon}_{d}(n)$ sortant du filtre 19. Pour cela dans sa forme équivalente (23) on remplace l'erreur réelle $e^{R}(n)$ par son expression $e^{R}(n) = \varepsilon^{R}_{d}(n) - \hat{\varepsilon}^{R}_{d}(n)$ où $\varepsilon^{R}_{d}(n)$ est la composante réelle du signal d'écho déphasé. Comme en moyenne le produit $\varepsilon^{R}_{d}(n).\varepsilon^{I}_{d}(n) = 0$, on trouve pour la formule de récurrence :

$$\hat{\phi}(n+1) = \hat{\phi}(n) + \beta.\hat{\varepsilon}^{R}_{d}(n).\varepsilon^{I}_{d}(n) \quad (24)$$

A la variante 1 de l'annuleur d'écho qui met en oeuvre les formules de récurrence (13) et (15) et dont le schéma est celui de la figure 2, correspond une variante 1 bis qui met en oeuvre les formules (21) et (23) et dont le schéma est représenté à la figure 5. On va essentiellement montrer ci-après les différences entre ces deux schémas qui comportent un certain nombre d'éléments communs, munis des mêmes références.

Sur la figure 5, le circuit déphaseur 25 fournit le signal d'écho déphasé $\varepsilon_{d}(n)$ dont la composante réelle $\varepsilon^{R}_{d}(n)$ seulement est appliquée à une entrée du circuit de différence 21. A l'autre entrée de ce circuit de différence est appliquée la composante réelle $\hat{\varepsilon}^{R}_{d}(n)$ du signal formé dans le filtre transversal 19. A la sortie du circuit de différence 21, on obtient la composante réelle $e^{R}(n)$ du signal d'erreur. Le circuit 20 de réglage des coefficients du filtre 19 met en oeuvre la formule de récurrence (21). Le schéma du circuit de réglage d'un coefficient est identique à celui de la figure 2, sauf que le circuit multiplicateur 31 reçoit le signal d'erreur réel $e^{R}(n)$, au lieu d'un signal complexe e(n). Les coefficients utilisés dans le filtre transversal 19

sont complexes, mais on peut remarquer que puisqu'il ne doit fournir qu'un signal réel $\hat{\varepsilon}^R_d(n)$, il n'est effectué dans ce filtre qu'environ la moitié des calculs requis dans le cas de l'annuleur d'écho de la figure 2.

Le circuit 28 de réglage de la phase simulée du signal d'écho met en oeuvre la formule de récurrence (23) et ne traite donc que des signaux réels. La composante imaginaire $\varepsilon^I_d(n)$ du signal d'écho déphasé est appliquée à une entrée du circuit multiplicateur 36 dont l'autre entrée reçoit la composante réelle $e^R(n)$ du signal d'erreur. Le signal réel fourni par le circuit multiplicateur 36 est appliqué au circuit multiplicateur 38 par le coefficient $\beta$, qui forme un filtre de boucle 39 du premier ordre. Le signal fourni par le circuit 38 est changé de signe par le circuit 42, puis appliqué à l'accumulateur qui est formé par les circuits 40 et 41 et qui fournit la phase simulée $\hat{\phi}(n)$ utilisée dans le circuit déphaseur 25.

La variante 1 bis de l'annuleur d'écho, montrée à la figure 5 présente l'avantage évident par rapport à la variante 1 montrée à la figure 2, de nécessiter moins de calculs, notamment dans le filtre transversal 19 qui ne doit fournir que la composante réelle du signal de copie d'écho. Une variante dérivée de cette variante 1 bis consiste à mettre en oeuvre, pour réaliser le circuit de réglage 28, la formule de récurrence :

$$\hat{\phi}(n + 1) = \hat{\phi}(n) + \beta . e^I(n) . - \varepsilon^R_d(n) \qquad (25)$$

On peut remarquer que cette formule (25) résulte du remplacement dans la formule (23) de $e^R(n)$ par $e^I(n)$ et de $\varepsilon^I_d(n)$ par $- e^R_d(n)$. Ce remplacement est légitime, car les composantes $e^I(n)$ et $\varepsilon^R(n)$ sont aussi significatives l'une que l'autre du signal d'erreur complexe e(n) tandis que les composantes $\varepsilon^I_d(n)$ et $- \varepsilon^R_d(n)$ sont aussi significatives l'une que l'autre du déphasage $- \hat{\phi}(n)$ effectué dans le circuit déphaseur 25. Il est facile de construire un schéma de l'annuleur d'écho mettant en oeuvre la formule de récurrence (21) pour le réglage des coefficients et la formule de récurrence (25) pour l'asservissement de la phase simulée. Mais on doit remarquer que dans cette variante dérivée, on perd en grande partie l'avantage de simplicité de la variante 1 bis de la figure 5, car on a besoin de la composante réelle $e^R(n)$ du signal d'erreur pour le réglage des coefficients et de la com-

posante imaginaire $e^I(n)$ pour l'asservissement de la phase simulée, ce qui nécessite dans le filtre transversal 19 le calcul des deux composantes réelle et imaginaire du signal $\hat{\varepsilon}_d(n)$.

A la variante 2 de l'annuleur d'écho qui met en oeuvre les formules de récurrence (13) et (16) et dont le schéma est celui de la figure 3, correspond une variante 2 bis qui met en oeuvre les formules (21) et (24) et dont le schéma est représenté à la figure 6.

Sur la figure 6, le circuit 20 de réglage des coefficients n'a pas été représenté en détail, car il est exactement le même que celui de la figure 5. Le schéma du circuit 28 de réglage de la phase simulée diffère de celui de la figure 5 par le fait que le circuit multiplicateur 36 reçoit la composante réelle $\hat{\varepsilon}^R_d(n)$ du signal de sortie du filtre 19 au lieu de la composante réelle $e^R(n)$ du signal d'erreur, tandis que d'autre part le circuit inverseur de signe 42 a été supprimé. Ces différences résultent clairement de la comparaison des formules (23) et (24). Cette variante 2 bis a le même avantage que la variante 1 bis en ce qui concerne la réduction du volume de calcul, notamment dans le filtre 19.

Une variante dérivée de la variante 2 bis de la figure 6 consiste à mettre en oeuvre pour réaliser le générateur 28 de la phase simulée la formule de récurrence :

$$\hat{\emptyset}(n+1) = \hat{\emptyset}(n) - \beta\, \hat{\varepsilon}^I_d(n).\varepsilon^R_d(n) \qquad (26)$$

Avec cette variante dérivée, on a besoin à la fois de la composante réelle et de la composante imaginaire du signal élaboré dans le filtre 19 et l'on perd en grande partie l'avantage de la variante 2 bis.

On a décrit jusqu'à présent plusieurs variantes de l'annuleur d'écho de l'invention dérivées d'une même structure I, qui est caractérisée par le fait que l'on utilise toujours un circuit déphaseur 25 pour changer la phase du signal d'écho complexe $\varepsilon_f(n)$ d'un angle $-\hat{\emptyset}(n)$, $\hat{\emptyset}(n)$ étant la phase simulée du signal d'écho et par le fait que l'on utilise ce signal d'écho déphasé et le signal fourni par le filtre transversal pour former le signal d'erreur servant à l'asservissement de l'annuleur d'écho. On va maintenant décrire une autre structure, dite structure II de l'annuleur d'écho de l'invention dans laquelle on utilise un circuit déphaseur pour changer la phase du signal fourni par le filtre transversal 19, d'un angle $+\hat{\emptyset}(n)$ et on utilise ce signal ainsi

déphasé et le signal d'écho complexe (non déphasé) pour former le signal d'erreur.

Un schéma de la structure II de l'annuleur d'écho de l'invention est montré sur la figure 7. Un certain nombre d'éléments des figures précédentes y sont représentés avec les mêmes références. Le filtre transversal 19 reçoit le signal complexe D(n) et fournit le signal complexe $\hat{\varepsilon}_d(n)$ qui est appliqué au circuit déphaseur 50 pour y être déphasé d'un angle + $\hat{\emptyset}(n)$ égal à la phase simulée du signal d'écho. Ce circuit déphaseur comporte à cet effet un circuit multiplicateur 51 recevant le signal $\hat{\varepsilon}_d(n)$ et le signal complexe exp j $\hat{\emptyset}(n)$ fourni par la mémoire 52 qui est lue à l'aide d'un signal de phase simulé $\hat{\emptyset}(n)$ provenant du circuit 53 de réglage de la phase simulée. Le signal complexe $\hat{\varepsilon}_f(n)$ ainsi obtenu est appliqué à une entrée du circuit de différence 21, à l'autre entrée duquel est appliqué le signal complexe d'écho à phase variable $\varepsilon_f(n)$. Ce signal complexe $\varepsilon_f(n)$ est formé, comme on l'a expliqué sur la figure 2, au moyen du circuit 22 qui forme le signal complexe correspondant au signal réel reçu sur la jonction hybride 6 et au moyen du circuit d'échantillonnage et de maintien 24.

Le signal d'erreur complexe e(n) fourni par le circuit de différence 21 est utilisé d'une part dans le circuit 54 de réglage des coefficients du filtre transversal 19 et d'autre part dans le circuit 53 de réglage de la phase simulée $\hat{\emptyset}(n)$, conjointement avec le signal $\hat{\varepsilon}_f(n)$. Ce signal $\hat{\varepsilon}_f(n)$ obtenu à la sortie du circuit déphaseur 50 est appelé par la suite signal de copie d'écho, étant donné que l'on cherche à le rendre égal au signal d'écho $\varepsilon_f(n)$ pour annuler le signal d'écho résiduel e(n).

Le critère utilisé pour l'asservissement des coefficients du filtre transversal et l'asservissement de la phase simulée du signal d'écho est ici encore la minimisation de la valeur quadratique moyenne du signal d'erreur e(n). La réalisation de ce critère par l'algorithme du gradient conduit aux deux formules de récurrence (6) et (7). Par ailleurs, en utilisant des notations déjà expliquées ci-dessus, on peut donner les expressions suivantes des signaux apparaissant sur la figure 7.

$$\hat{\varepsilon}_d(n) = \underset{\rightarrow}{D}(n).\vec{d} \qquad (27)$$

$$\varepsilon_f(n) = \underset{\rightarrow}{D}(n).\vec{k}.\exp j\, \emptyset(n) \qquad (28)$$

$$\hat{\varepsilon}_f(n) = \underset{\rightarrow}{D}(n).\vec{d}.\exp j\, \hat{\emptyset}(n) \qquad (29)$$

$$e(n) = \underset{\rightarrow}{D}(n) \left[\vec{k}.\exp.j\, \emptyset(n) - \vec{d}.\exp j\, \emptyset(n)\right] \qquad (30)$$

En utilisant ces expressions (27) à (30) et en effectuant des calculs selon la méthode déjà expliquée à propos de la structure I, on peut montrer que la formule de récurrence (6) utilisée pour l'asservissement des coefficients du filtre transversal 19, peut s'écrire :

$$\vec{d}(n+1) = \vec{d}(n) + \alpha.e(n).\exp - j\, \hat{\emptyset}(n).D^*(n) \qquad (31)$$

On peut montrer également que la formule de récurrence (7) utilisée pour l'asservissement de la phase simulée peut s'écrire :

$$\hat{\emptyset}(n+1) = \hat{\emptyset}(n) + \beta\, \mathbb{I}_m \left[e(n).\hat{\varepsilon}^*{}_f(n)\right] \qquad (32)$$

On peut montrer aussi que la formule de récurrence (7) peut s'écrire :

$$\hat{\emptyset}(n+1) = \hat{\emptyset}(n) + \beta\, \mathbb{I}_m \left[\varepsilon_f(n).\hat{\varepsilon}^*{}_f(n)\right] \qquad (33)$$

On peut montrer enfin que la formule de récurrence (7) peut s'écrire :

$$\hat{\emptyset}(n+1) = \hat{\emptyset}(n) + \beta\, \mathbb{I}_m \left[e(n).\exp - j\, \hat{\emptyset}(n).\hat{\varepsilon}^*{}_d(n)\right] \qquad (34)$$

Dans ces formules de récurrence (31) à (34) les coefficients $\alpha$ et $\beta$ sont petits par rapport à 1, de sorte qu'on évite d'avoir à calculer des valeurs moyennes.

La mise en oeuvre des formules de récurrence (31) et (32) correspond à la variante 1 de la structure II de l'annuleur d'écho qui a une certaine analogie avec la variante 1 de la structure I parce que dans le terme de modification de la phase simulée intervient dans les deux cas le signal d'erreur e(n) ; on peut comparer à cet effet les formules (15) et (32).

C'est le schéma de cette variante 1 qui est représenté à la figure 7. Le circuit 54 règle les coefficients du filtre transversal

19 suivant la formule de récurrence (31). Le schéma de réglage d'un coefficient quelconque $d_q(n)$ met en oeuvre la formule de récurrence ci-dessous, déduite de la formule (31) :

$$d_q(n + 1) = d_q(n) + \alpha.e(n).\exp - j\ \hat{\emptyset}(n).D^*(n - q) \quad (31A)$$

Le circuit 54 comporte pour former le coefficient $d_q(n + 1)$, un circuit multiplicateur 55 qui reçoit le signal complexe d'erreur e(n) et le signal complexe $\exp - j\ \hat{\emptyset}(n)$ qui est obtenu à la sortie du circuit 69. Ce circuit 69 forme la valeur conjuguée du signal $\exp j\ \hat{\emptyset}(n)$ disponible à la sortie de la mémoire 52. Le circuit 56 forme la valeur conjuguée $D^*(n - q)$ du signal $D(n - q)$ et à l'aide des circuits multiplicateurs 57 et 58 est formé le terme $\alpha.e(n).\exp - j\ \hat{\emptyset}(n).D^*(n - q)$ qui est ajouté à l'aide du circuit additionneur 59 au coefficient $d_q(n)$ sortant du circuit de retard 60. On forme ainsi le coefficient $d_q(n + 1)$ à utiliser dans le filtre transversal 19 à l'instant (n + 1)T.

La phase simulée est engendrée dans le circuit de réglage 53 qui met en oeuvre la formule de récurrence (32). Ce circuit 53 comprend le circuit 61 qui forme la valeur conjuguée $\hat{\varepsilon}^*_f(n)$ du signal de copie d'écho disponible à la sortie du circuit déphaseur 50. Le circuit multiplicateur 62 forme le produit $e(n).\hat{\varepsilon}^*_f(n)$, la boîte 63 montrant que l'on n'en retient que la partie imaginaire qui est multipliée par le coefficient $\beta$ à l'aide du circuit multiplicateur 64. Le terme de modification $\beta\ \mathbb{I}_m \left[e(n).\hat{\varepsilon}^*_f(n)\right]$ est ajouté à l'aide du circuit additionneur 65 à la phase simulée $\hat{\emptyset}(n)$ sortant du circuit de retard 66 pour former la phase simulée $\hat{\emptyset}(n + 1)$ à utiliser dans le circuit déphaseur 50 à l'instant (n + 1)T. Comme on l'a déjà indiqué à propos de la structure I, on peut utiliser, pour les mêmes raisons, à la place du circuit multiplicateur 64 ayant la fonction d'un filtre de boucle du premier ordre, un filtre de boucle 67 plus complexe, tel qu'un filtre du deuxième ordre répondant au schéma de la figure 4. Cette remarque est valable pour toutes les variantes décrites ci-après.

On obtient une variante dérivée de la variante 1 en tenant compte dans la formule (30) de l'égalité :

$\mathbb{I}_m \left[e(n).\hat{\varepsilon}^*_f(n)\right] = - \mathbb{I}_m \left[e^*(n).\hat{\varepsilon}_f(n)\right]$. On obtient alors la formule de récurrence suivante :

$$\hat{\phi}(n+1) = \hat{\phi}(n) - \beta\, \mathrm{Im}\left[e^*(n).\hat{\varepsilon}_f(n)\right] \qquad (35)$$

Pour mettre en oeuvre cette formule de récurrence (35) au lieu de (32) il suffit sur le schéma de la figure 7 d'appliquer directement à une entrée du circuit multiplicateur 62, le signal de copie d'écho $\hat{\varepsilon}_f(n)$, d'appliquer à l'autre entrée la valeur conjuguée $e^*(n)$ du signal d'erreur et enfin de changer le signe du signal fourni par le filtre 67.

La variante 2 de la structure II de l'annuleur d'écho de l'invention consiste à mettre en oeuvre les formules de récurrence (31) et (33). Le schéma de cette variante 2 est représenté sur la figure 8 sur laquelle les éléments ayant la même fonction que sur la figure 7 sont munis des mêmes références.

Sur cette figure 8, on n'a pas représenté en détail le circuit 54 de réglage des coefficients du filtre 19, qui met en oeuvre la formule (31) et est exactement le même que celui représenté à la figure 7. Le circuit 53 de réglage de la phase simulée $\hat{\phi}(n)$ met en oeuvre la formule (33) et diffère de celui de la figure 7, par le fait que le circuit multiplicateur 62 reçoit le signal d'écho $\varepsilon_f(n)$ au lieu du signal d'erreur $e(n)$.

On obtient une variante dérivée de la variante 2 en tenant compte dans la formule (33) de l'égalité :

$\mathrm{Im}\left[\varepsilon_f(n).\hat{\varepsilon}^*_f(n)\right] = -\,\mathrm{Im}\left[\varepsilon^*_f(n).\hat{\varepsilon}_f(n)\right]$. Selon cette variante 2 dérivée, on met en oeuvre pour l'asservissement de la phase simulée, la formule de récurrence :

$$\hat{\phi}(n+1) = \hat{\phi}(n) - \beta\, \mathrm{Im}\left[\varepsilon^*_f(n).\hat{\varepsilon}_f(n)\right] \qquad (36)$$

Les transformations à effectuer sur le schéma de la figure 8 pour mettre en oeuvre la formule (36) sont évidentes à partir de ce qui précède.

Une variante 3 de la structure II de l'annuleur d'écho de l'invention consiste à mettre en oeuvre les formules de récurrence (31) et (34). On peut remarquer que dans ces deux formules apparaît la même quantité $e_d(n) = e(n).\exp - j\,\hat{\phi}(n)$. Il en résulte pour cette variante 3, le schéma montré à la figure 9.

Le circuit 54 de réglage des coefficients et le circuit 53 de réglage de la phase simulée comportent en commun le circuit 70 qui fournit, en formant la valeur conjuguée du signal exp j $\hat{\varnothing}(n)$ disponible à la sortie de la mémoire 52, le signal exp - j $\hat{\varnothing}(n)$ et le circuit multiplicateur 71 qui forme le produit $e_d(n) = e(n) \exp - j\,\hat{\varnothing}(n)$. Pour la commodité on a disposé les circuits 70 et 71 dans le générateur 53. Le signal $e_d(n)$ est utilisé dans le circuit 54 de réglage des coefficients au moyen des circuits 56 à 60 connectés exactement comme sur la figure 7. Ce signal $e_d(n)$ est également appliqué à une entrée du circuit multiplicateur 62 dont l'autre entrée reçoit le signal $\hat{\varepsilon}^*_d(n)$ formé par le circuit 72 qui est connecté à la sortie du filtre transversal 19. La sortie du circuit multiplicateur 62 est connectée aux circuits 63 à 67 connectés exactement comme sur la figure 7.

Dans la formule de récurrence (34) on peut remplacer la quantité $\mathrm{I}_m \left[e(n) \exp - j\,\hat{\varnothing}(n).\hat{\varepsilon}^*_d(n)\right]$ par la quantité $- \mathrm{I}_m \left[e^*(n) \exp j\,\hat{\varnothing}(n).\hat{\varepsilon}_d(n)\right]$. On obtient alors la formule de récurrence :

$$\hat{\varnothing}(n+1) = \hat{\varnothing}(n) - \beta\,\mathrm{I}_m \left[e^*(n).\exp j\,\hat{\varnothing}(n).\hat{\varepsilon}_d(n)\right] \qquad (37)$$

La mise en oeuvre de cette formule (37) constitue une variante dérivée de la variante 3 dont il est facile d'établir le schéma à partir de la figure 9.

Avec un annuleur d'écho ayant la structure II, c'est-à-dire comportant un circuit déphaseur 50 pour déphaser de $+\hat{\varnothing}(n)$ le signal complexe fourni par le filtre 19, on peut aussi utiliser comme critère d'asservissement des coefficients du filtre 19 et de la phase simulée, la minimisation de la valeur quadratique moyenne de la composante réelle $e^R(n)$ du signal d'erreur complexe e(n). Ce critère peut être réalisé suivant l'algorithme du gradient qui se traduit d'une manière générale par les formules de récurrence (19) et (20).

Tous calculs effectués, la formule de récurrence (19) utilisée pour le réglage des coefficients peut se mettre sous la forme ci-après, avec $\alpha \ll 1$.

$$\vec{d}(n+1) = \vec{d}(n) + \alpha.e^R(n).\exp - j\,\hat{\varnothing}(n).\vec{D}^*(n) \qquad (38)$$

La formule de récurrence (20) utilisée pour l'asservissement de la phase simulée peut se mettre sous la forme ci-après, avec $\beta \ll 1$.

$$\hat{\phi}(n+1) = \hat{\phi}(n) - \beta . e^R(n) . \hat{\varepsilon}^I_f(n) \qquad (39)$$

$\hat{\varepsilon}^I_f(n)$ est la composante imaginaire du signal de copie d'écho $\hat{\varepsilon}_f(n)$.

On peut aussi écrire la formule de récurrence (20) sous la forme :

$$\hat{\phi}(n+1) = \hat{\phi}(n) - \beta . \varepsilon^R_f(n) . \hat{\varepsilon}^I_f(n) \qquad (40)$$

$\varepsilon^R_f(n)$, composante réelle du signal d'écho complexe, est en fait le signal d'écho lui-même.

On doit noter que dans toutes les variantes de la structure II de l'annuleur d'écho dans lesquelles on utilise la composante réelle ou imaginaire du signal d'erreur, il est toujours nécessaire que dans le filtre transversal 19 on forme les deux composantes réelle et imaginaire du signal $\hat{\varepsilon}_d(n)$, ce qui est un désavantage par rapport à certaines variantes correspondantes de la structure I.

A la variante 1 de la structure II de l'annuleur d'écho qui met en oeuvre les formules de récurrence (31) et (32) et dont le schéma est donné à la figure 7, correspond une variante 1 bis qui met en oeuvre les formules de récurrence (38) et (39) et dont le schéma est donné à la figure 10. La description ci-après montre la différence entre ces deux schémas.

On voit sur la figure 10 qu'à une entrée du circuit de différence 21 est appliqué le signal appelé $\varepsilon^R_f(n)$ et qui résulte directement de l'échantillonnage par le circuit 24, du signal d'écho apparaissant à l'accès réception de la jonction hybride 6. A l'autre entrée de ce circuit de différence 21 est appliquée la composante réelle $\hat{\varepsilon}^R_f(n)$ du signal de copie d'écho fourni par le circuit déphaseur 50. La composante réelle $e^R(n)$ du signal d'erreur, fournie par le circuit de différence 21 est utilisée dans le circuit 54 de réglage des coefficients qui met en oeuvre la formule de récurrence (38). Le schéma de ce circuit 54 est identique à celui de la figure 7, sauf que le circuit multiplicateur 55 reçoit sur une entrée le signal réel $e^R(n)$ au lieu d'un signal complexe e(n).

Le générateur 53 de la phase simulée du signal d'écho met en oeuvre la formule de récurrence (39) et ne traite donc que des signaux réels. Le circuit multiplicateur 62 forme le produit de la composante réelle $e^R(n)$ du signal d'erreur et de la composante imaginaire $\hat{\varepsilon}^I_f(n)$ du signal complexe $\hat{\varepsilon}_f(n)$ qui est fourni par le circuit déphaseur 50. Ce produit est multiplié par le coefficient β dans le circuit 64, puis changé de signe dans le circuit 68 et enfin appliqué à l'accumulateur 65, 66 qui fournit la phase simulée utilisée dans le circuit déphaseur 50.

Une variante dérivée de la variante 1 bis que l'on vient de décrire résulte du remplacement, dans la formule de récurrence (39), de $e^R(n).\hat{\varepsilon}^I_f(n)$ par $- e^I(n).\hat{\varepsilon}^R_f(n)$. On obtient alors la formule de récurrence :

$$\hat{\emptyset}(n + 1) = \hat{\emptyset}(n) + \beta\, e^I(n).\hat{\varepsilon}^R_f(n) \qquad (41)$$

Dans cette variante 1 bis dérivée, on met en oeuvre la formule de récurrence (38) pour le réglage des coefficients et la formule de récurrence (41) pour le réglage de la phase simulée. Le schéma correspondant est facile à établir ; on a le désavantage que l'on doit former la composante réelle du signal d'erreur pour le réglage des coefficients et sa composante imaginaire pour l'asservissement de la phase simulée.

A la variante 2 de la structure II de l'annuleur d'écho, qui met en oeuvre les formules de récurrence (31) et (33) et dont le schéma est donné à la figure 8, correspond une variante 2 bis qui met en oeuvre les formules de récurrence (38) et (40) et dont le schéma est montré à la figure 11.

Sur la figure 11, le circuit 54 de réglage des coefficients n'a pas été représenté en détail, car il est exactement le même que celui de la figure 10. Le schéma du circuit 53 de réglage de la phase simulée diffère de celui de la figure 10 par le fait que le circuit multiplicateur 62 reçoit le signal d'écho $e^R_f(n)$ au lieu du signal d'erreur réel $e^R(n)$.

Une variante dérivée de la variante 2 bis que l'on vient de décrire, résulte du remplacement, dans la formule de récurrence (40), de $\varepsilon^R_f(n).\hat{\varepsilon}^I_f(n)$, par $- \varepsilon^I_f(n).\hat{\varepsilon}^R_f(n)$. On obtient alors la formule de récurrence :

$$\hat{\emptyset}(n+1) = \hat{\emptyset}(n) + \beta\, \varepsilon^{I}_{f}(n).\hat{\varepsilon}^{R}_{f}(n) \qquad (42)$$

Dans cette variante 2 bis dérivée, on met en oeuvre les formules de récurrence (38) et (42). Il est aisé de construire le schéma correspondant ; on a le désavantage que l'on a besoin d'un circuit 22 pour former le signal d'écho complexe dont la composante réelle $\varepsilon^{R}_{f}(n)$ est nécessaire pour former le signal d'erreur réel $e^{R}(n)$ utilisé dans la formule (38) et dont la composante imaginaire $\varepsilon^{I}_{f}(n)$ est utilisée dans la formule (42).

A la variante 3 décrite ci-dessus et correspondant à la mise en oeuvre des formules de récurrence (31) et (34), correspond une variante 3 bis qui, pour le réglage des coefficients, met en oeuvre la formule (38) et, pour l'asservissement de la phase simulée, met en oeuvre la formule de récurrence suivante :

$$\hat{\emptyset}(n+1) = \hat{\emptyset}(n) + \beta\, \mathrm{I}_m \left[e^{R}(n) \exp - j\, \hat{\emptyset}(n)\, \hat{\varepsilon}^{*}_{d}(n)\right] \qquad (43)$$

A la lumière des schémas précédents, il est aisé de construire le schéma de la variante 3 bis.

On a décrit ci-dessus un certain nombre de variantes de l'annuleur d'écho de l'invention, basées chacune sur la mise en oeuvre de formules de récurrence pour le réglage des coefficients et de la phase simulée. Il est clair qu'en établissant des formes équivalentes des diverses formules de récurrence indiquées ci-dessus, on peut trouver beaucoup d'autres variantes, sans sortir du cadre de l'invention.

Par ailleurs, l'homme de l'art comprendra aisément que l'annuleur d'écho de l'invention peut être utilisé non seulement dans la transmission de données mais aussi dans la transmission de signaux téléphoniques où peut se poser le même problème d'écho à phase variable.

REVENDICATIONS :

1. Annuleur d'écho connecté entre deux voies unidirectionnelles émission et réception couplées à une voie bidirectionnelle et destiné à annuler un signal d'écho à phase variable se produisant dans la voie réception, cet annuleur d'écho comprenant un filtre adaptatif recevant la version complexe d'un signal de la voie émission et un circuit de différence fournissant un signal de différence entre deux signaux formés respectivement à partir du signal dans la voie réception et du signal de sortie du filtre adaptatif, caractérisé en ce qu'il comporte des moyens pour former un signal complexe correspondant au signal dans la voie réception, des moyens de déphasage pour changer la phase dudit signal complexe de la voie réception d'un angle égal et opposé à une phase simulée du signal d'écho, le signal de différence résultant de la différence entre un signal fourni par lesdits moyens de déphasage et un signal fourni par le filtre adaptatif, les coefficients du filtre adaptatif et ladite phase simulée étant réglés ensemble, de façon itérative, pour rendre minimale la valeur quadratique moyenne du signal d'écho résiduel présent dans le signal de différence.

2. Annuleur d'écho connecté entre deux voies unidirectionnelles émission et réception couplées à une voie bidirectionnelle et destiné à annuler un signal d'écho à phase variable se produisant dans la voie réception, cet annuleur d'écho comprenant un filtre adaptatif recevant la version complexe d'un signal de la voie émission et un circuit de différence fournissant un signal de différence entre deux signaux formés respectivement à partir du signal dans la voie réception et du signal de sortie du filtre adaptatif, caractérisé en ce qu'il comporte des moyens dans le filtre adaptatif pour former un signal complexe à la sortie du filtre, des moyens de déphasage pour changer la phase du signal complexe fourni par le filtre adaptatif d'un angle égal à une phase simulée du signal d'écho, le signal de différence résultant de la différence entre un signal de la voie réception et un signal fourni par lesdits moyens de déphasage, les coefficients du filtre adaptatif et ladite phase simulée étant réglés ensemble, de façon itérative, pour rendre minimale la valeur quadratique moyenne du signal d'écho résiduel présent dans ledit signal de différence.

3. Annuleur d'écho selon la revendication 1, caractérisé en ce que le filtre adaptatif comporte des moyens pour fournir un signal

complexe et le circuit de différence forme un signal complexe résultant de la différence entre le signal complexe fourni par lesdits moyens de déphasage et le signal complexe fourni par le filtre adaptatif, le circuit de réglage des coefficients comportant pour chaque coefficient $d_q(n)$ à régler, des moyens de calcul pour former le produit $e(n).D^*(n-q)$, $e(n)$ étant le signal de différence à l'instant nT, $D^*(n-q)$ étant la valeur conjuguée d'un échantillon $D(n-q)$ stocké dans le filtre adaptatif et qui s'est produit à son entrée à l'instant $(n-q)T$, ledit produit étant pondéré par un coefficient de pondération $\alpha$ inférieur à 1 pour former l'incrément de modification du coefficient $d_q(n)$ à l'instant nT.

4. Annuleur d'écho selon la revendication 2, caractérisé en ce qu'il comporte des moyens pour former un signal complexe correspondant au signal dans la voie réception et le circuit de différence forme un signal complexe résultant de la différence entre ledit signal complexe dans la voie réception et le signal complexe fourni par lesdits moyens de déphasage, le circuit de réglage des coefficients comportant pour chaque coefficient $d_q(n)$ à régler, des moyens de calcul pour former le produit $e(n).D^*(n-q).\exp - j\,\hat{\phi}(n)$, $\hat{\phi}(n)$ étant la phase simulée du signal d'écho à l'instant nT, ledit produit étant pondéré par un coefficient de pondération $\alpha$ inférieur à 1 pour former l'incrément de modification du coefficient $d_q(n)$ à l'instant nT.

5. Annuleur d'écho selon l'une des revendications 3 ou 4, caractérisé en ce que le circuit de réglage de la phase simulée du signal d'écho comporte des moyens de calcul pour former à chaque instant nT la composante imaginaire du produit du signal de différence et de la valeur conjuguée du signal de sortie desdits moyens de déphasage (ou du produit de la valeur conjuguée du signal de différence et du signal de sortie desdits moyens de déphasage), ladite composante imaginaire étant pondérée par un coefficient de pondération $\beta$ inférieur à 1 pour former l'incrément de modification de la phase simulée à l'instant nT.

6. Annuleur d'écho selon l'une des revendications 3 ou 4, caractérisé en ce que le circuit de réglage de la phase simulée du signal d'écho comporte des moyens de calcul pour former à chaque instant nT la composante imaginaire du produit du signal appliqué à l'une quelconque des deux entrées du circuit de différence et de la valeur conjuguée du signal appliqué à l'autre entrée du circuit de différence, ladite composante imaginaire étant pondérée par un coefficient de pondération β inférieur à 1 pour former l'incrément de modification de la phase simulée à l'instant nT.

7. Annuleur d'écho selon la revendication 4, caractérisé en ce qu'il comporte des moyens de calcul pour former à chaque instant nT la quantité $e_d(n) = e(n).\exp - j\hat{\emptyset}(n)$ qui est utilisée dans le circuit de réglage de la phase simulée du signal d'écho, ce dernier circuit comportant des moyens de calcul pour former à chaque instant nT la composante imaginaire du produit de ladite quantité $e_d(n)$ et de la valeur conjuguée du signal de sortie du filtre adaptatif, ladite composante imaginaire étant pondérée par un coefficient de pondération β inférieur à 1 pour former l'incrément de modification de la phase simulée à l'instant nT.

8. Annuleur d'écho selon la revendication 1, caractérisé en ce que le filtre adaptatif comporte des moyens pour fournir une composante réelle et le circuit de différence forme une composante de signal de différence réelle résultant de la différence entre la composante réelle du signal fourni par lesdits moyens de déphasage et la composante réelle fournie par le filtre adaptatif, le circuit de réglage des coefficients comportant, pour chaque coefficient $d_q(n)$ à régler, des moyens de calcul pour former le produit $e^R(n).D^*(n-q)$, $e^R(n)$ étant ladite composante réelle du signal de différence à l'instant nT, ledit produit étant pondéré par un coefficient de pondération α inférieur à 1 pour former l'incrément de modification du coefficient $d_q(n)$ à l'instant nT.

9. Annuleur d'écho selon la revendication 2, caractérisé en ce que le circuit de différence forme une composante réelle de signal de différence résultant de la différence entre le signal réel dans la voie réception et la composante réelle du signal fourni par lesdits moyens de déphasage, le circuit de réglage des coefficients comportant pour chaque coefficient $d_q(n)$ à régler, des moyens de calcul pour former le produit $e^R(n).D^*(n-q).\exp - j\hat{\emptyset}(n)$, ledit produit étant pondéré par un coefficient de pondération α inférieur à 1 pour former l'incrément de modification du coefficient $d_q(n)$ à l'instant nT.

10. Annuleur d'écho selon la revendication 8 ou 9, caractérisé en ce que le circuit de réglage de la phase simulée du signal d'écho comporte des moyens de calcul pour former à chaque instant nT le produit de la composante réelle du signal de différence et de la composante imaginaire du signal de sortie desdits moyens de déphasage, ledit produit

étant pondéré par un coefficient de pondération β inférieur à 1 pour former l'incrément de modification de la phase simulée à l'instant nT.

11. Annuleur d'écho selon la revendication 8 ou 9, caractérisé en ce que des moyens sont prévus pour former en outre une composante imaginaire du signal de différence et le circuit de réglage de la phase simulée du signal d'écho comporte des moyens de calcul pour former à chaque instant nT, le produit de ladite composante imaginaire du signal de différence et de la composante réelle du signal de sortie desdits moyens de déphasage, ledit produit étant pondéré par un coefficient de pondération β inférieur à 1 pour former l'incrément de modification de la phase simulée à l'instant nT.

12. Annuleur d'écho selon l'une des revendications 8 ou 9, caractérisé en ce que le circuit de réglage de la phase simulée du signal d'écho comporte des moyens de calcul pour former à chaque instant nT le produit de la composante imaginaire du signal fourni par lesdits moyens de déphasage (qui est appliquée à une entrée du circuit de différence), et de la composante réelle du signal appliqué à l'autre entrée du circuit de différence, ledit produit étant pondéré par un coefficient de pondération β inférieur à 1 pour former l'incrément de modification de la phase simulée à l'instant nT.

13. Annuleur d'écho selon l'une des revendications 8 ou 9, caractérisé en ce que le circuit de réglage de la phase simulée du signal d'écho comporte des moyens de calcul pour former à chaque instant nT le produit de la composante réelle du signal fourni par lesdits moyens de déphasage (qui est appliquée à une entrée du circuit de différence) et de la composante imaginaire du signal appliqué à l'autre entrée du circuit de différence, ledit produit étant pondéré par un coefficient de pondération β inférieur à 1 pour former l'incrément de modification de la phase simulée à l'instant nT.

14. Annuleur d'écho selon la revendication 7, caractérisé en ce que la quantité $e_d(n)$ est formée au moyen de la composante réelle $e^R(n)$ du signal de différence e(n).

15. Annuleur d'écho selon l'une des revendications 5 à 7 ou 10 à 14, caractérisé en ce que dans le circuit de réglage de la phase simulée du signal d'écho, le signal qui est pondéré par un coefficient

de pondération β est également pondéré par un coefficient de pondération γ inférieur à 1, le signal pondéré par le coefficient γ étant appliqué à un circuit accumulateur dont le signal de sortie est ajouté au signal pondéré par le coefficient β pour former l'incrément de modification de la phase simulée.

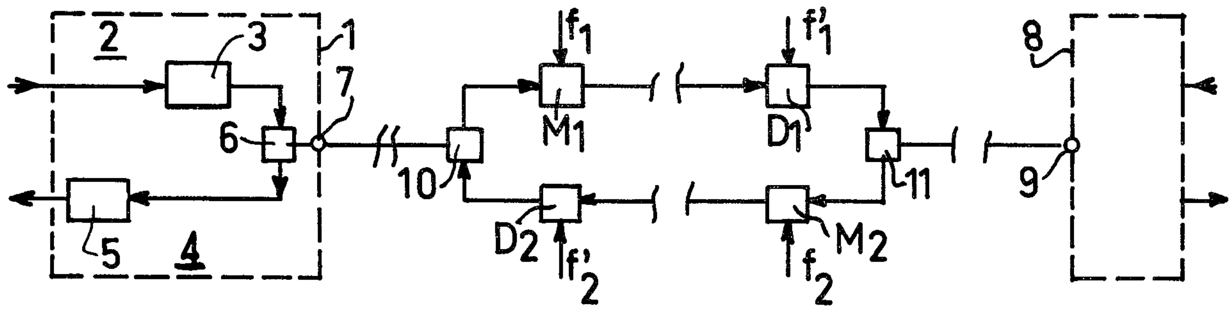


FIG.1

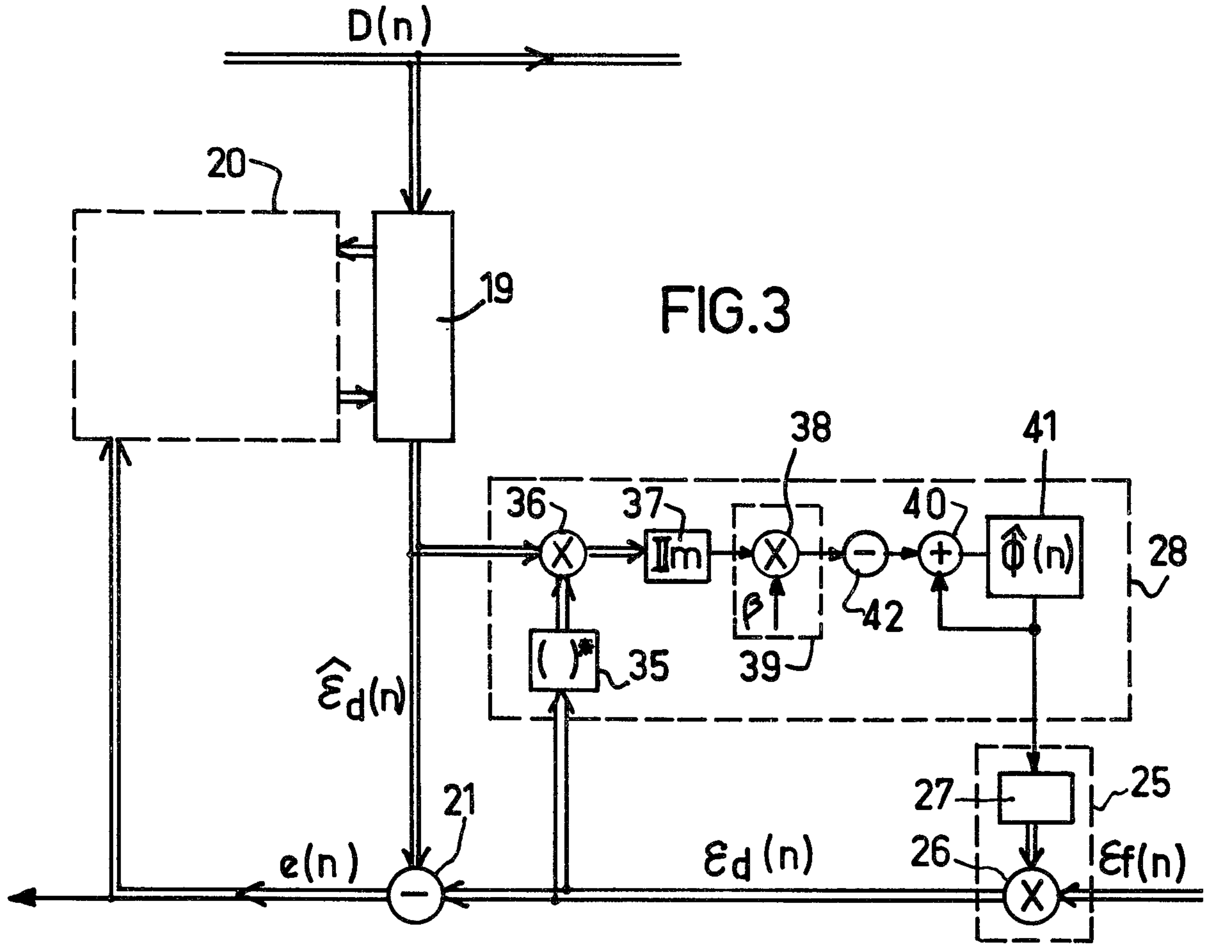


FIG.3

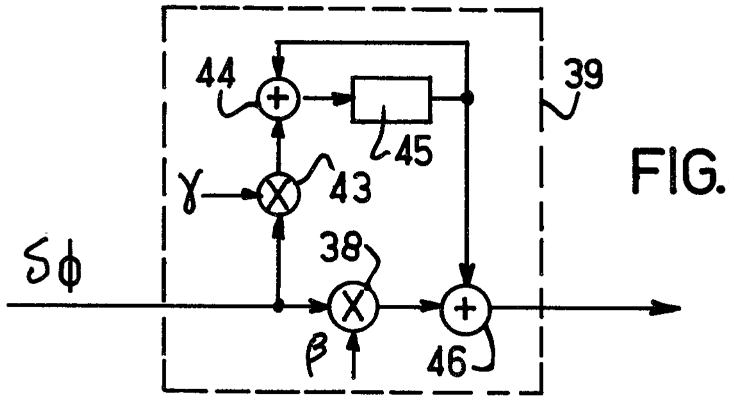


FIG.4

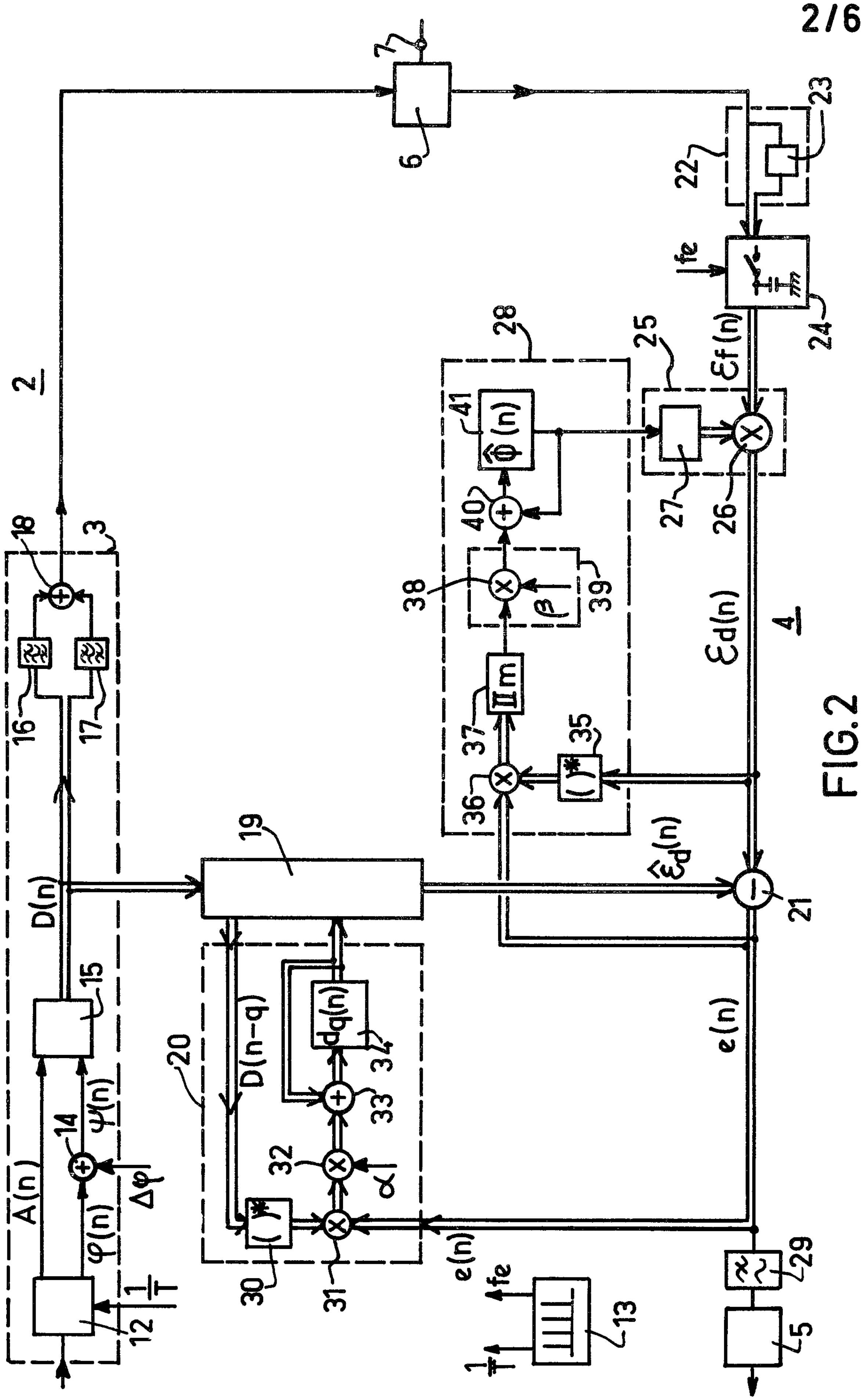
2
3
4
A(n)
φ(n)
Δφ
Ψ(n)
D(n)
D(n-q)
dq(n)
e(n)
α
β
Ed(n)
Ef(n)
Φ̂(n)
fe
1/T
Πm
( )*
5
6
7
12
13
14
15
16
17
18
19
20
21
22
23
24
25
26
27
28
29
30
31
32
33
34
35
36
37
38
39
40
41

FIG.2

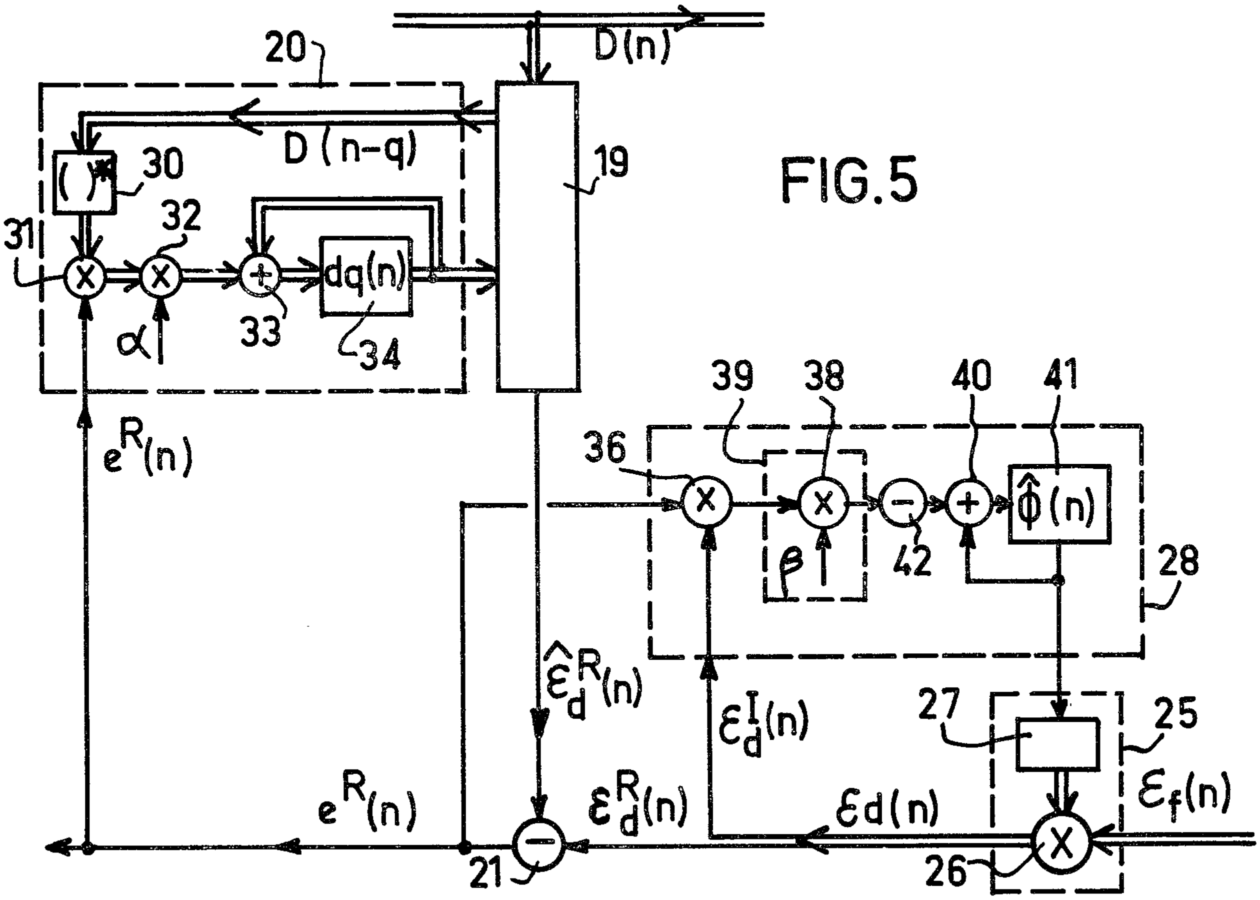
D(n)
20
D (n-q)
30
31
32
dq(n)
33
34
α
19
eR(n)
39
38
40
41
36
Φ̂(n)
β
42
28
ε̂dR(n)
εdI(n)
27
25
eR(n)
εdR(n)
εd(n)
εf(n)
21
26

FIG.5

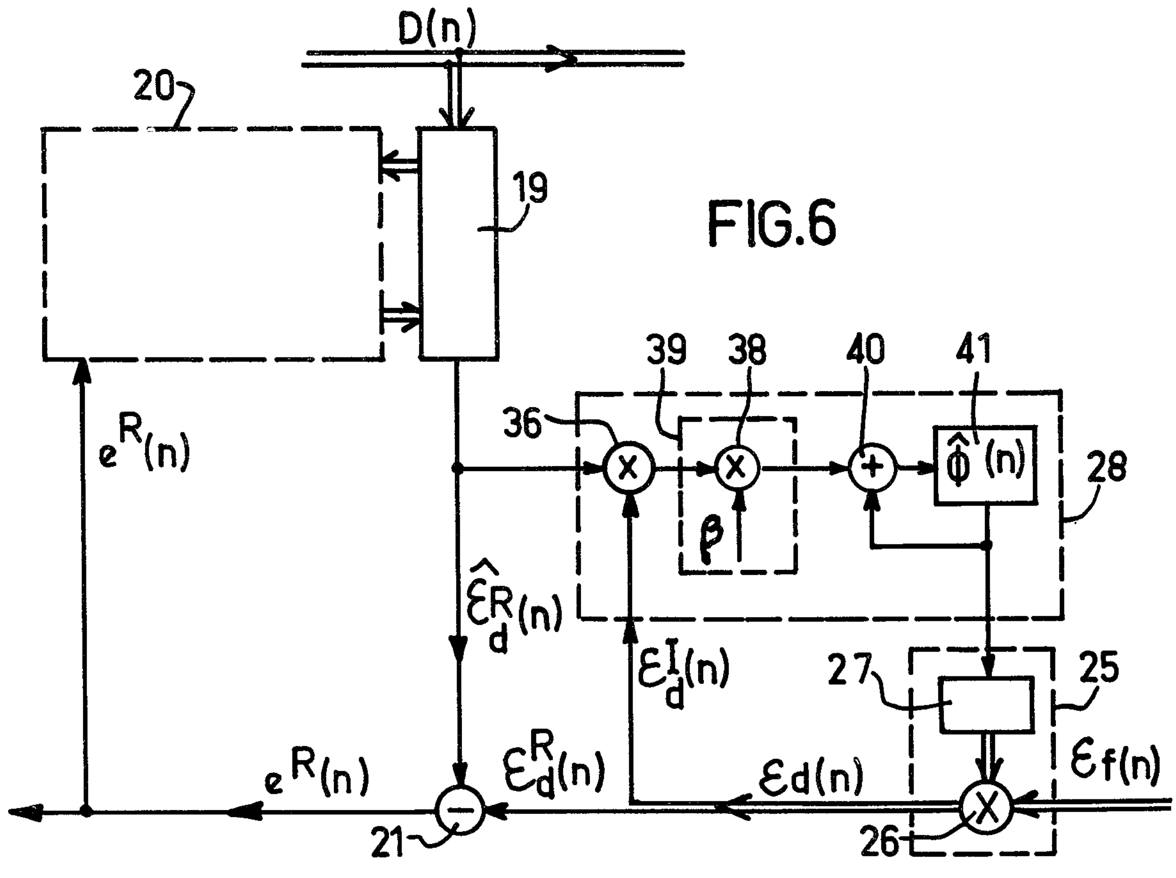
D(n)
20
19
eR(n)
39
38
40
41
36
Φ̂ (n)
28
β
ε̂dR(n)
εdI(n)
27
25
eR(n)
εdR(n)
εd(n)
εf(n)
21
26

FIG.6

0036696

4/6

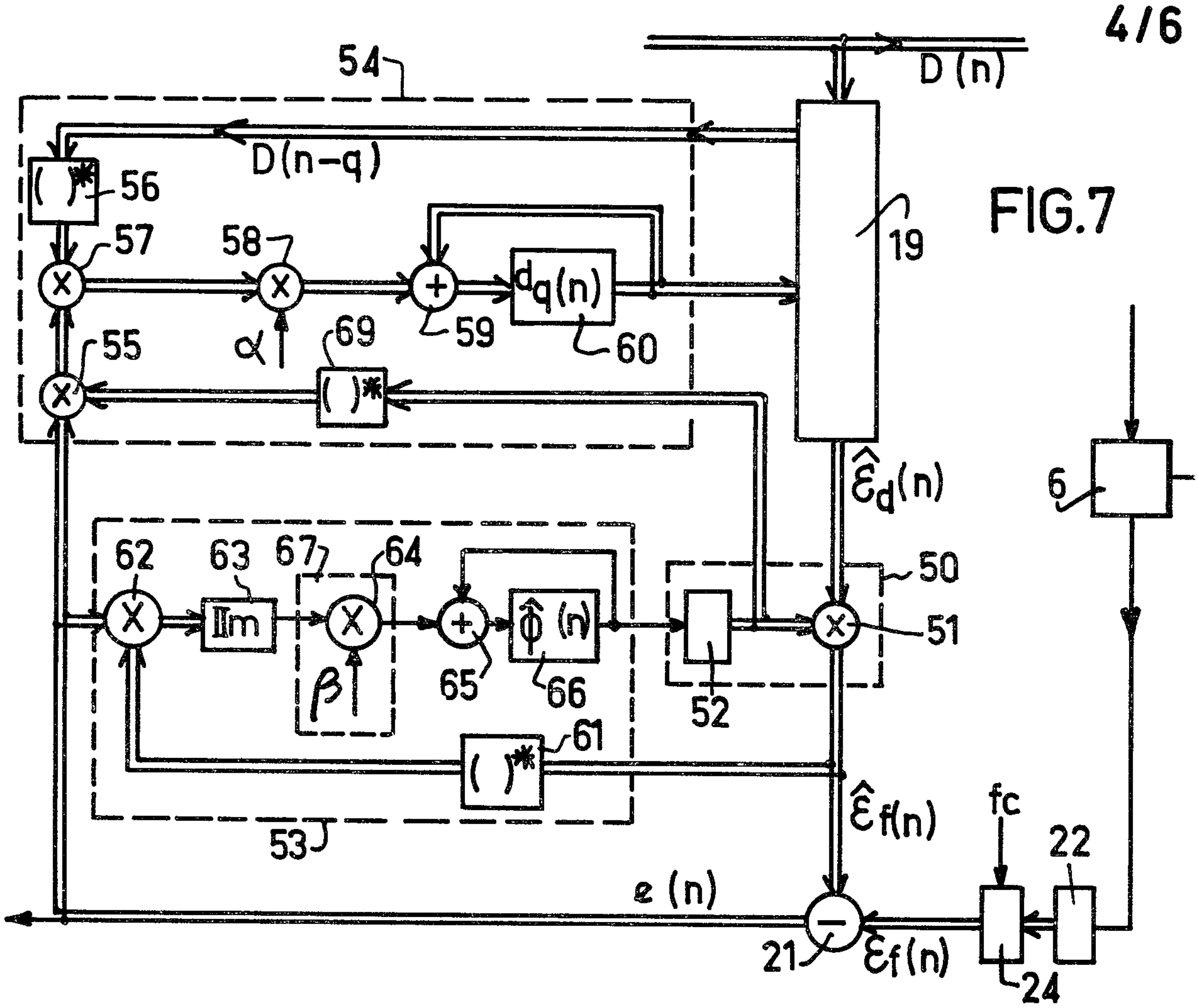


FIG.7

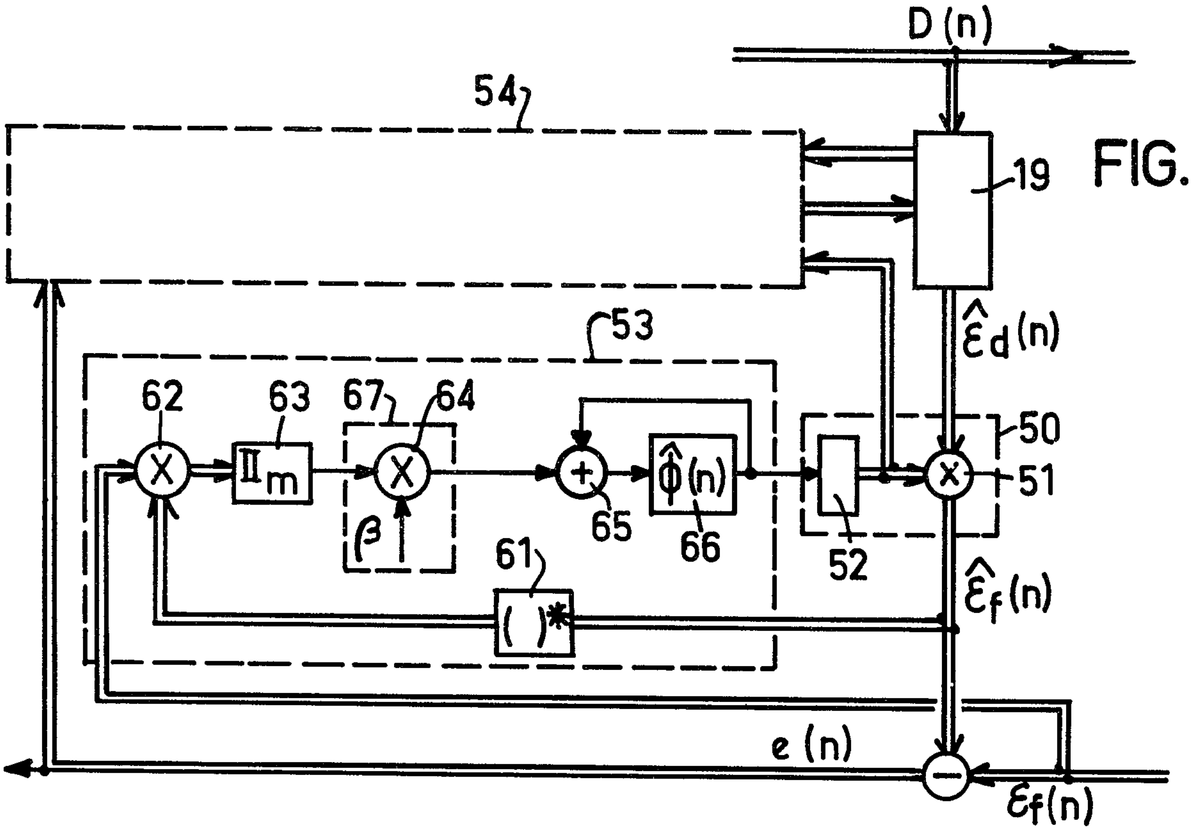


FIG.8

4-VI-PHF 80-519

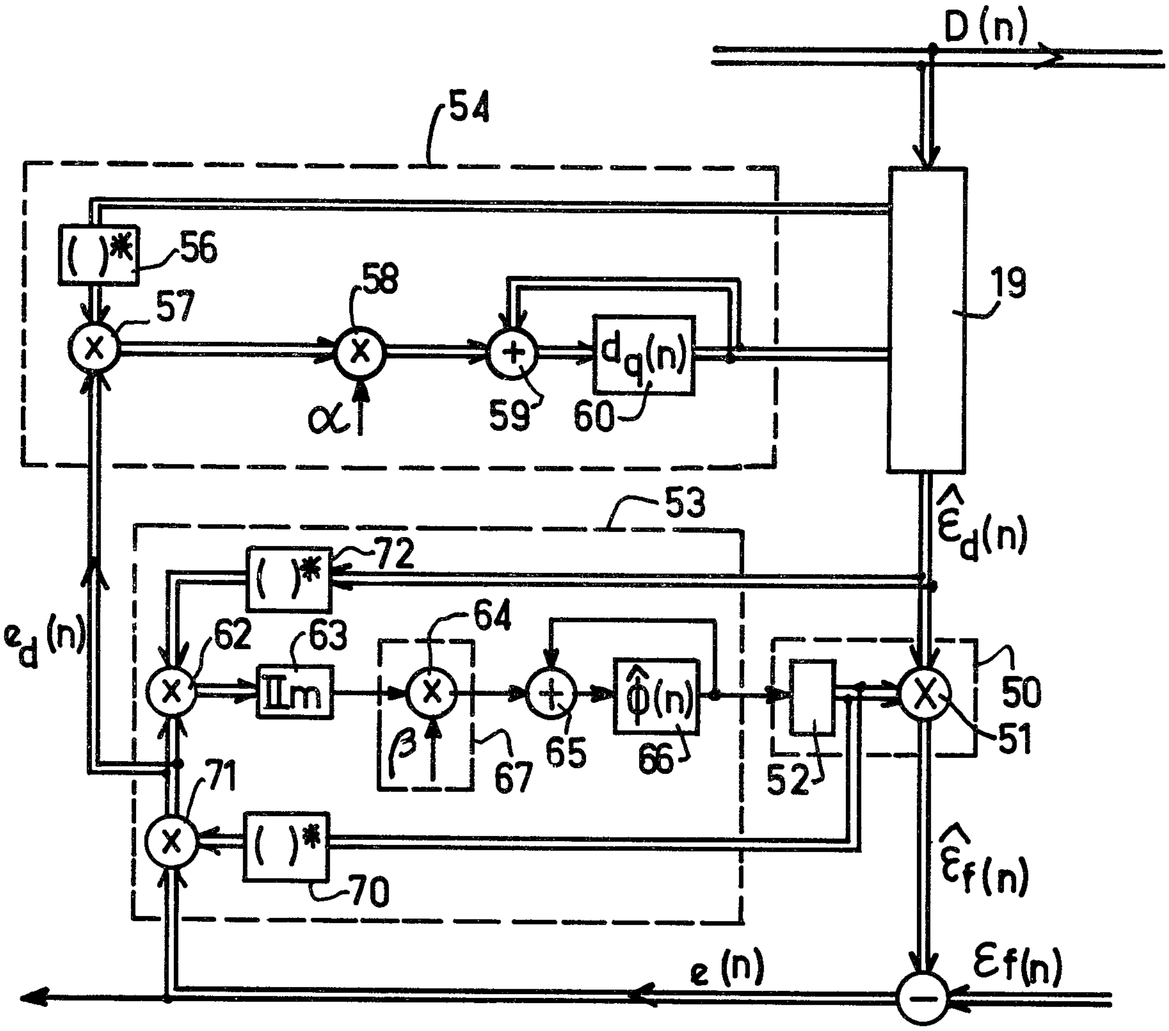
D(n)
54
( )*
56
57
58
59
60
$d_q(n)$
α
19
$\hat{\varepsilon}_d(n)$
53
( )*
72
$e_d(n)$
62
63
Im
64
β
65
$\hat{\phi}(n)$
66
67
50
51
52
71
( )*
70
$\hat{\varepsilon}_f(n)$
$\varepsilon_f(n)$
e(n)

FIG.9

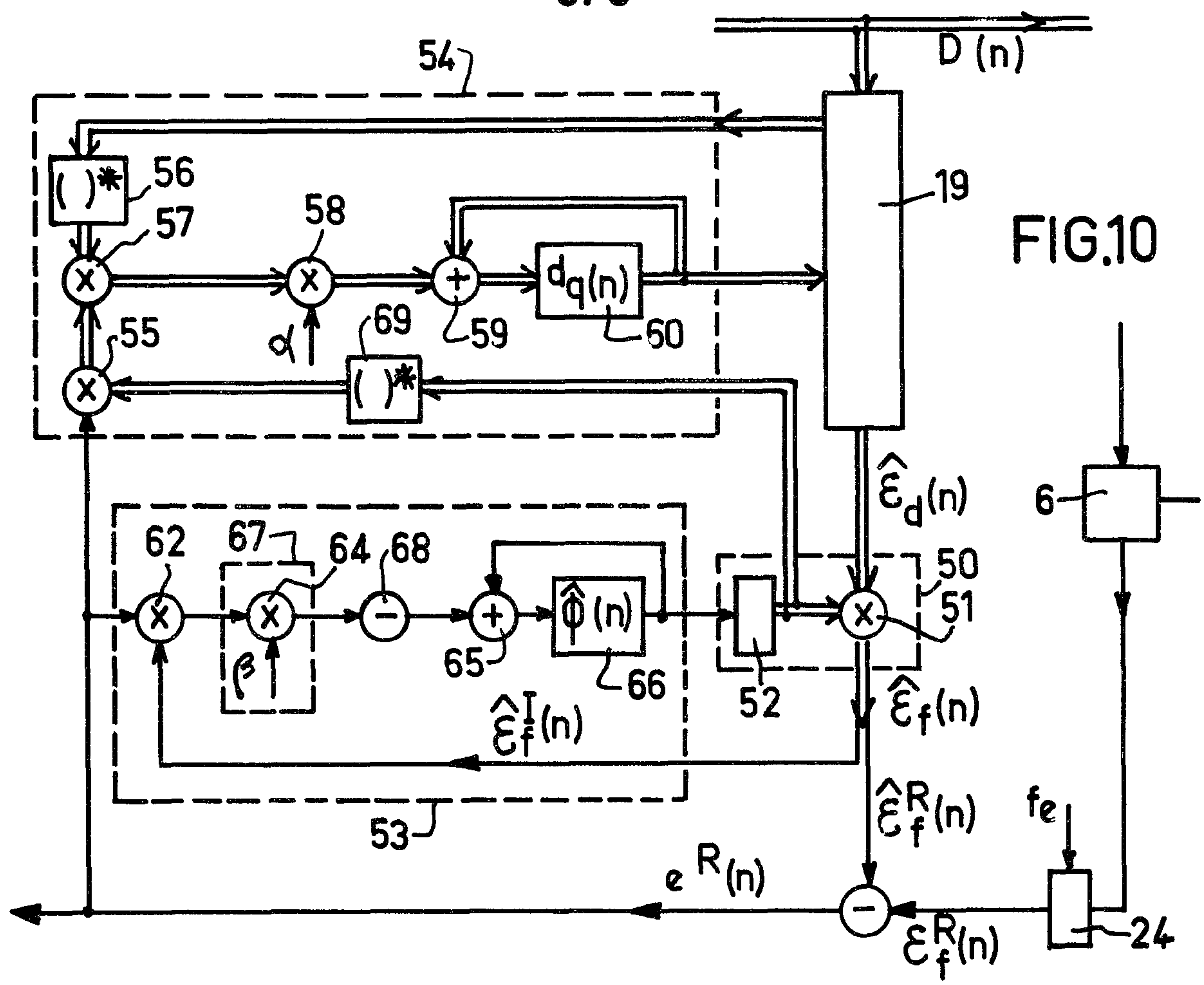


FIG.10

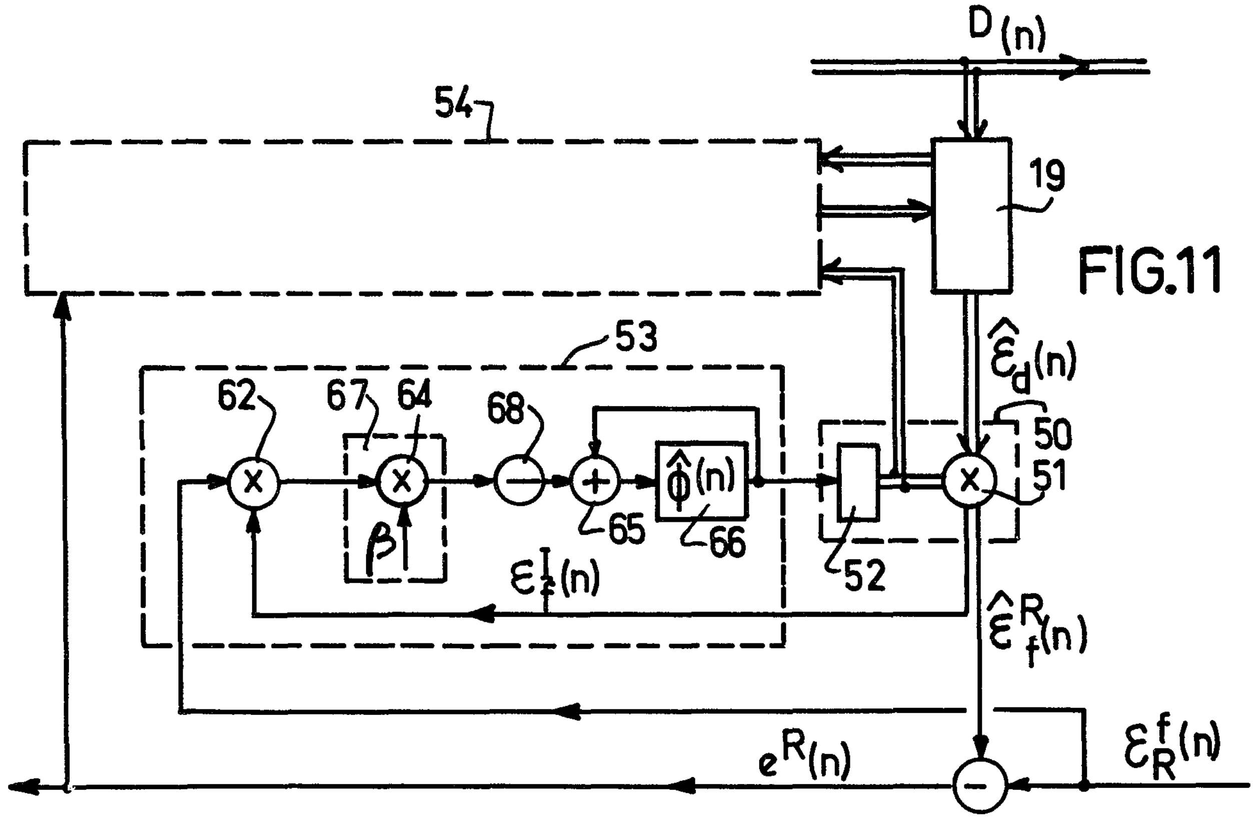


FIG.11

6-VI-PHF 80-519

Office européen des brevets

# RAPPORT DE RECHERCHE EUROPEENNE

0036696

Numéro de la demande

EP 81 20 0309

## DOCUMENTS CONSIDERES COMME PERTINENTS

| Catégorie | Citation du document avec indication, en cas de besoin, des parties pertinentes | Revendication concernée |
|---|---|---|
| X | DE - A - 2 833 518 (SIEMENS)<br>* Figure 1 *<br>---- | 1 |

CLASSEMENT DE LA DEMANDE (Int. Cl.³)

H 04 B 3/23

DOMAINES TECHNIQUES RECHERCHES (Int. Cl.³)

H 04 B 3/23

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 29-06-1981 | GEISLER |